# EUROPEAN PATENT SPECIFICATION

(11) **EP 1 411 734 B1**
(45) Date of publication and mention of the grant of the patent: **11.05.2005**
(21) Application number: 03078856.6
(22) Date of filing: 23.06.1995
(51) Int. Cl.: H04N 9/804

(54) **Optical disk and method of playback**
Optische Platte und Verfahren zur Wiedergabe
Disque optique et méthode de reproduction

(30) Priority: 24.06.1994 JP 14341194; 08.08.1994 JP 18603594
(43) Date of publication of application: 21.04.2004
(62) Divisional of application: 02024773.0
(73) Proprietor: MITSUBISHI DENKI KABUSHIKI KAISHA, Tokyo 100 (JP)
(72) Inventor: Nagasawa, Masato, c/o Mitsubishi Denki K.K., Nagaokakyo-shi Kyoto 617 (JP)
(74) Representative: Whitlock, Holly Elizabeth Ann

(56) References cited:
- EP-A- 0 396 285
- EP-A- 0 536 630
- EP-A- 0 545 323
- EP-A- 0 579 514
- EP-A- 0 596 423
- US-A- 4 931 879
- US-A- 5 212 742
- "SID INTERNATIONAL SYMPOSIUM. DIGEST OF TECHNICAL PAPERS." 17 May 1992 (1992-05-17), SOCIETY FOR INFORMATION DISPLAY , PLAYA DEL REY (CA) 190220 , XP000479004 * page 123, column 1, line 26 - column 2, line 46; figure 1 *
- J. VAN DER MEER: "The Full Motion System for CD-I." IEEE TRANSACTIONS ON CONSUMER ELECTRONICS, vol. 38, no. 4, November 1992 (1992-11), pages 910-920, XP000324653 NEW YORK US

## Description

### BACKGROUND OF THE INVENTION

The present invention relates to an optical disk and a method of playing back from an optical disk.

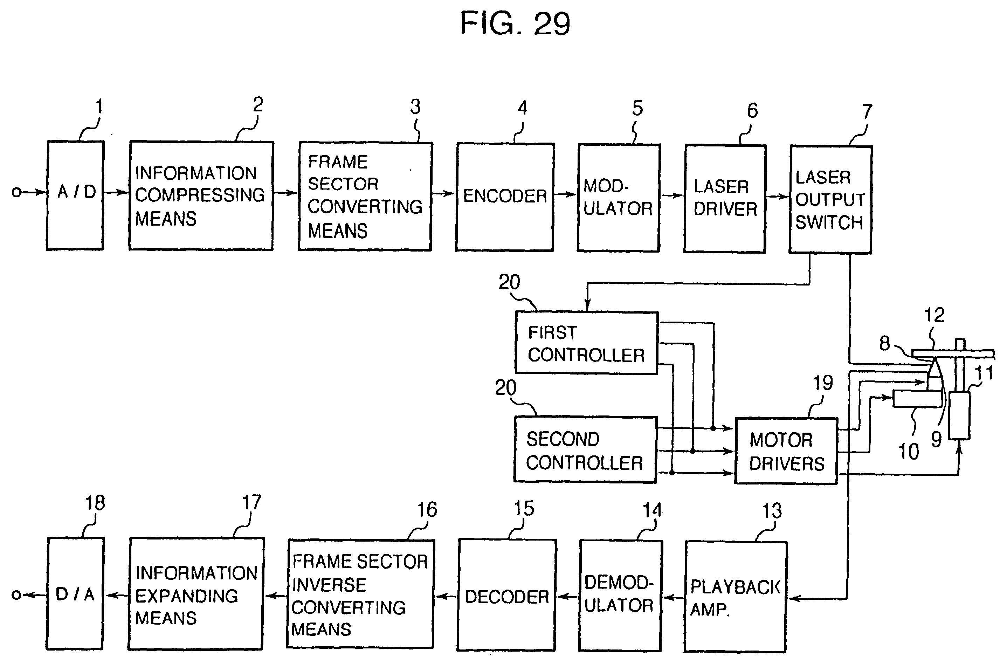

FIG. 29 is a block diagram showing a conventional optical disk recording/playback device shown in Japanese Patent Kokai Publication 114369/1992. An A/D converter 1 converts a video signal, an audio signal or the like into digital information. An information compressing means 2 serves to compress the output of the A/D converter 1. A frame sector converting means 3 converts the compressed information into sector information equal in length to a multiple of the frame period. An encoder 4 encodes the output of the frame sector converting means 3. A modulator 5 modulates the output of the encoder 4 into predefined modulated codes so as to reduce interference between codes on the recording medium. A laser driver 6 is for modulating the laser light in accordance with the modulated codes. A laser output switch 7 is driven by the laser driver 6 to vary the current supplied to the laser in an optical head 8, for emitting laser light.

An actuator 9 is for tracking the emitted light beam. A traverse or feed motor 10 is for moving the optical head 8 in the radial direction of a disk 12 which can record information by magneto-optical recording or phase-change recording.

A disk motor 11 is driven by a motor driver 19 to rotate the disk 12. The motor driver 19 is controlled by motor controllers 20. A playback amplifier 13 amplifies the playback signal from the optical head 8. A demodulator 14 demodulates the amplified playback signal to obtain data from the recorded, modulated signal. A decoder 15 decodes the demodulated signal, and a frame sector inverse conversion means 16 performs frame sector inversion conversion to restore pure original image data with the addresses and parities having been removed. An expanding means 17 expands the compressed information, and a D/A converter 18 converts the expanded information into an analog video or audio signal.

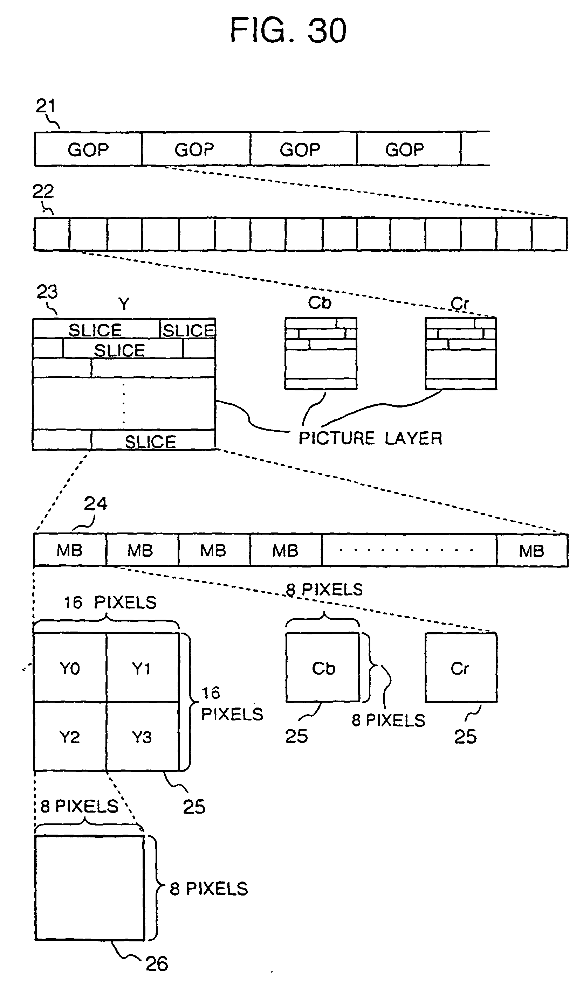

FIG. 30 shows, in a simplified form, the data arrangement structure (layer structure) of the Moving Picture Coding Experts Group (MPEG) system which are being standardized in connection with transfer and storage, in the compressed form, of digital moving picture information. In the figure, reference 21 denotes a group of pictures (hereinafter referred to as "GOPs") consisting of information of a plurality of frames, 22 denotes a GOP layer formed of several pictures (screens). 23 denotes slices into which each picture is divided, 24 denotes a slice layer formed of several macroblocks, 25 denotes a microblock layer, and 26 denotes a block layer formed of 8 x 8 pixels.

The microblock layer 25 is a block consisting of 8 x 8 pixels, which is the minimum unit of encoding in the MPEG system, and discrete cosine transform (hereinafter referred to as "DCT") is effected taking each block as a unit. Four adjacent Y signal blocks and one Cb block and one Cr block which correspond, with regard to position, to the four Y signal blocks, i.e., six blocks in all form a macroblock. Several macroblocks form a slice. The macroblock is a minimum unit for motion compensated prediction, and the motion vector for the motion compensated prediction are determined taking each macroblock as a unit.

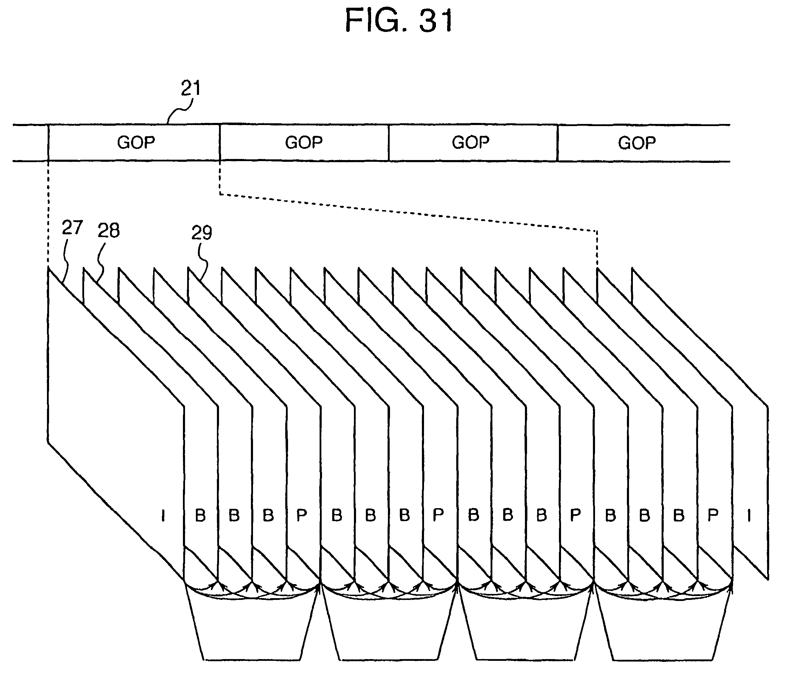

FIG. 31 a diagram showing the encoding structure for the case where 17 pictures form one GOP. In the drawing, 27 denotes an I-picture which is image information for which intra-frame DCT is effected, 29 denotes a P-picture which is image information for which forward motion-compensated DCT encoding is effected using the I-picture or another P-picture (P-picture other than the P-picture for which the forward motion-compensated DCT encoding is being effected) as a reference picture, 28 denotes a B-picture for which motion compensated DCT encoding is effected using the I-picture and/or P-pictures at preceding and succeeding positions, as reference pictures.

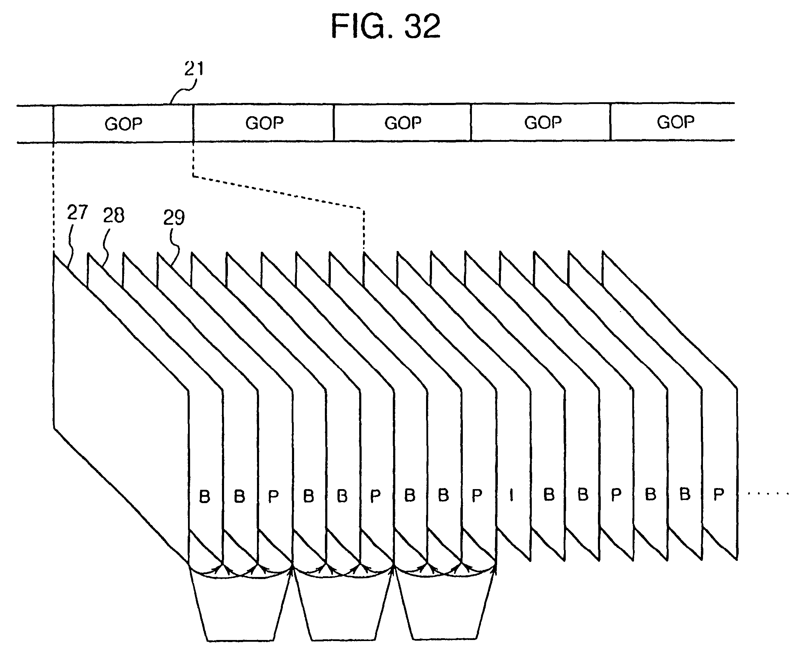

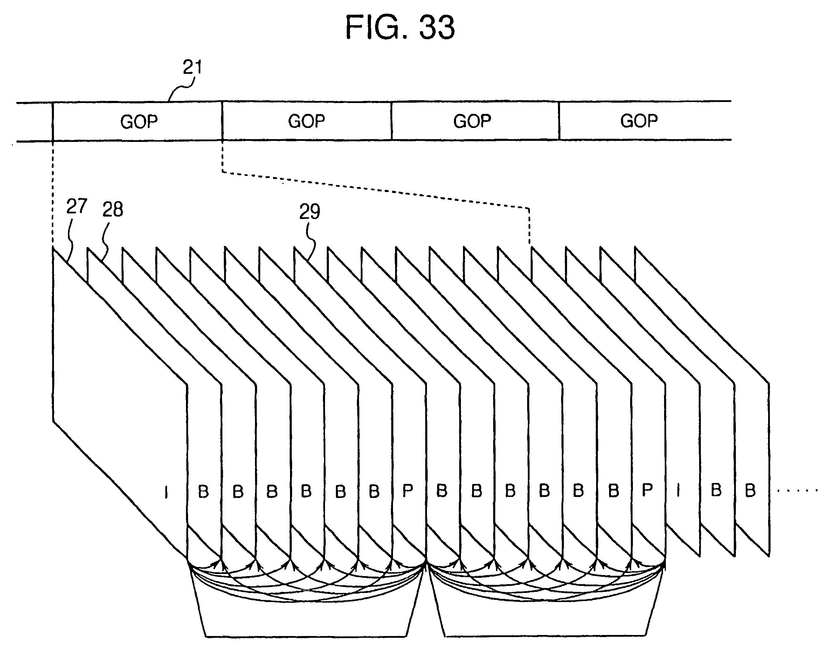

FIG. 32 is a diagram showing the encoding structure for the case where 10 pictures form one GOP, and FIG. 33 is a diagram showing the encoding structure for the case where 15 pictures form one GOP.

In the drawings, P-, B- and I-pictures are respectively represented as "P" or "P-picture," "B" or "B-picture," and "I" or "I-picture."

The operation will next be described with reference to the drawings. With the advancement in the digital image information compression technology, it is now possible to realize an image filing system which is very convenient to use, by recording the compressed information on a disk, with which search is much easier than with a VTR with a magnetic tape. Since, such disk file system handles digital information, there is no deterioration due to dubbing, and because recording and reproduction is achieved optically and there is no direct contact. reliability is high.

Conventionally, an optical disk recorder shown in FIG. 29 is used for recording the digital compressed motion information of the MPEG system shown in FIG. 30. The image information digitized by the A/D converter 1 is converted at the information compression means 2 into information of a standard compression picture system such as an MPEG system. The compressed information is encoded and modulated so that the effects of the interference between the codes on the disk is reduced, and is then recorded on a disk 12. By making the amount of data for each GOP substantially identical, and by dividing information into sectors having a length equal to a multiple of a frame period, editing and the like, treating each GOP as a unit, is possible.

During playback, the image information reproduced from the optical disk 12 is amplified by the playback amplifier 13, and returned into a digital data by the demodulator 14 and the decoder, and pure original image data with the addresses and parities having been removed can be restored at the frame sector inverse conversion means 16. Furthermore, an image signal is restored by effecting, MPEG decoding, for example, at the information expanding means 17, and is then converted into an analog signal by the D/A converter 18 so that display on a monitor or the like is possible.

If the MPEG system is used as the digital motion compression method as described above, the encoding structure comprising one or more compressed I-pictures 27 by means of intra-frame DCT, one or more P-pictures 29 which is formed of image information obtained by DCT encoding with motion compensation in the forward direction, and one or more B-pictures 28 obtained by DCT encoding with motion compensation using I- and/or P-pictures positioned in front and at the back along the time axis, as reference pictures, as shown in FIG. 31 to FIG. 33.

Since an I-picture is obtained by intra-frame DCT, it is possible to effect reproduction of the image independently. A P-picture on the other hand is obtained by forward motion compensation, the reproduction of the image is not effected until after the reproduction of the I-picture. Since the B-picture is obtained by prediction from both sides, the I- and/or P-pictures must first be reproduced before the B-picture. The amount of data is the smallest and the efficiency of encoding is the best with the B-picture, because it is predicted in both directions.

Because the B-picture is not reproduced independently. it requires an I- or P-pictures, so that if the number of the B-pictures is increased, the capacity of the buffer memories must be increased, and the delay time from the data input to the image playback is lengthened. In a storage media, represented by optical disks or the like, an encoding method with a high compression efficiency is desired for long-time recording, the delay in the image playback is not problematical. Accordingly, the encoding system showing in FIG. 31 to FIG. 33 is appropriate.

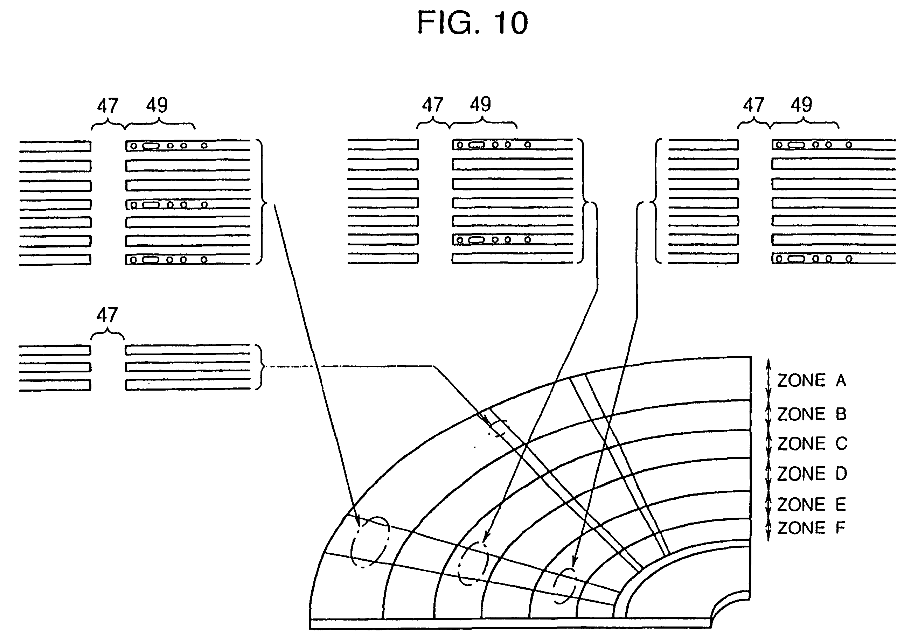

Now let us consider how the image search and fast playback are effected from a disk receding data with the encoding structure as described above. If the encoding structure is as shown in FIG. 33, and if playback is made extracting I-pictures, fast playback is possible. In this case, when an I-picture is reproduced, then a track jump is conducted to access the next or preceding GOP, and the I-picture therein is reproduced. By repeating such an operation, a fast playback or reverse playback is realized. The feed speed limited to the 15-time speed in the case of FIG. 33, and 10-time speed in the case of FIG. 32.

In the actual image search, if the speed is too high, it is difficult to the human eyes to recognize the image. For rough recognition, the fast search at a 10-time or more speed is appropriate, but for search with regard to the details after the rough search, fast playback or reverse playback at several-time speed is necessary It is therefore necessary that special playback can be conducted over a wide range, of from several tens of time to several times the normal speed, to permit effective image search. Where the compressed data of the MPEG system is used, and if it is attempted to reproduce P-pictures in the encoding structure of FIG. 31 to FIG. 33, the B-pictures positioned before the P-pictures are also read, and it is therefore difficult to realize four to eight time speed.

Since the conventional playback method reproduce the encoding structure on the disk as it is. special playback can be achieved only by I-pictures, and fast and reverse playback can be achieved only at a speed which corresponds to the number of frames contained in one GOP or a multiple thereof.

Also, with the recording format of the digital image shown in connection with the prior art examples. I-pictures, P-pictures and B-pictures are arranged in a sequence along the time axis. so that the special playback is limited to the following method.

Particularly, a fundamental method for special playback in the system for recording digital motion picture image in the prior art performs special playback using information recorded in the TOC area which is at the inner periphery of the disk. In this case, special playback is achieved by reading, in accordance with the head address of the scene change (the address of a location where a picture immediately after the scene change is recorded) or the head address of. the image file recorded in the TOC area, the digital motion picture image of the I-picture stored in the address, and reproducing them in turn.

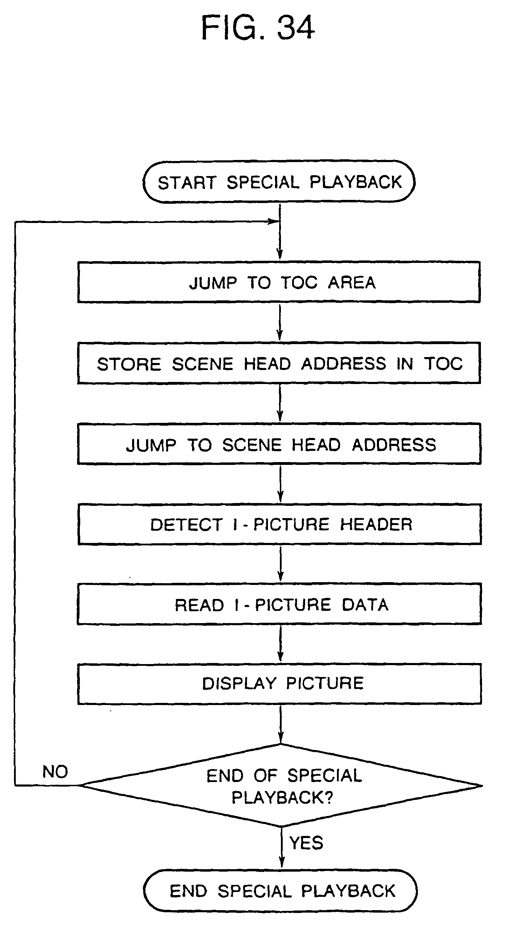

The operation for reading from the optical disk in such a method is shown in the flowchart of FIG. 34. This flowchart shows the case in which special playback is effected on the basis of the address at the head of the scene in the motion picture image information recorded in the TOC area. First jump is made to the TOC area, and the scene head address is stored in the internal memory, and then jump is made to the address that has been stored, and the I-picture in the GOP to which jump has been made is reproduced, and displayed. and movement to the next address of jump destination is made. Such a sequence of operation is repeated.

With such a method however, a large amount of addresses which should be search for (to which jump is destined) need to be stored, and the TOC information must be rewritten each time recording is made.

Moreover, during special playback, it is necessary to skip B-picture data for reproducing P-pictures, but as the I-pictures, B-pictures and P-pictures are recorded on the disk in sequence, waiting time may have to be spent before reproducing a P-picture when a track jump is conducted.

Furthermore, the amount of data of the I-picture encoded by intra-frame DCT is larger than the amount of data of P- or B-picture, so that super-fast playback, of several tens time speed cannot be realized because the time for inputting data may be insufficient.

When starting a search for a desired GOP from an arbitrary position on the disk. search operation must be repeated several times for finding the head of each GOP (at which time code or address of the image is recorded).

Furthermore, as the scene change position in the motion picture image information is not known, a scene-by-scene search for finding cannot be achieved.

In addition, because only part of the data in each GOP is read in the special playback, image playback may not be accomplished, or playback may be possible only with regard to part of the display screen.

### SUMMARY OF THE INVENTION

An object of the invention is to increase the special playback speed.

Another object of the invention is to reduce rotation waiting time at the time of track jump can be reduced.

Another object of the invention is to enable continuous reproduction of I-pictures.

Another object of the invention is to reduce the capacity of memory for storing image during playback of image.

Another object of the invention is to facilitate locating the head position of each GOP.

Another object of the invention is to enable recording of information designating the manner of playback.

The invention is set out in the appended claims.

### BRIEF DESCRIPTION OF THE DRAWINGS

In the drawing: -
FIG. 1 is a block diagram showing the recording system in Embodiment 1;
FIG. 2A and FIG. 2B are diagrams showing the digital motion picture image data recording format in Embodiment 1;
FIG. 3A and FIG. 3B are diagrams showing the variation of the disk rotational speed during fast playback of the image data in Embodiment 1;
FIG. 4 is a flowchart showing the operation of the special playback on the basis of the jump destination address written in the video attribute data in Embodiment 1;
FIG. 5 is a flowchart showing the operation of data reading from the optical disk during special playback in Embodiment 1;
FIG. 6 is a flowchart showing the operation of reading data from the optical disk in special playback for continuously reproducing I- and P-pictures in Embodiment 1;
FIG. 7A to FIG. 7C are diagrams showing the digital image data recording format in Example 2;
FIG. 8 is a diagram showing the digital image data recording format in Example 2;
FIG. 9 is a diagram showing the digital image data recording format in Example 3;
FIG. 10 is a diagram showing the digital image data recording format on the disk in the continuous guide groove system in Example 3;
FIG. 11 is a diagram showing the digital image data recording format on the disk in the sample-servo system in Example 3:
FIG. 12 is a flowchart showing the reading operation of Example 3, in which the disk rotation speed is raised during special fast playback;
FIG. 13A and FIG. 13B show the arrangement of data in a GOP of digital motion picture image data, and the overall data arrangement including audio data;
FIG. 14 shows data arrangement of digital motion picture image data recorded on an optical disk in Example 4;
FIG. 15 is a block diagram showing a digital motion picture image information recording device using an optical disk of Example 4;
FIG. 16 shows data arrangement of screen-divided I-picture data in a GOP in Example 4;
FIG. 17 is a flowchart showing the operation of Embodiment 4;
FIG. 18A shows frequency-divided I-picture data arrangement in a GOP of Example 5, and the paths of track jump during playback;
FIG. 18B shows how the frequency divide I-picture data is obtained;
FIG. 19 shows frequency-divided I-picture data arrangement in a GOP of another example of configuration of Example 5, and the paths of track jump during playback;
FIG. 20 shows frequency-divided I-picture data arrangement in a GOP of another example of configuration of Example 5, and the paths of track jump during playback;
FIG. 21 shows frequency-divided I-picture data arrangement in a GOP of another example of configuration of Example 5, and the paths of track jump during playback;
FIG. 22 is a flowchart showing the operation of Example 5;
FIG. 23 shows data arrangement on an optical disk of the zone CAV type of Example 5, which is preformatted in a sample-servo method;
FIG. 24 shows data arrangement on an optical disk of the continuous groove type of Example 5;
FIG. 25 is a block diagram showing an example of circuit for restoring image from the layered data of Example 6;
FIG. 26 is a block diagram of a digital motion picture image information playback circuit of Example 6;
FIG. 27 shows data arrangement of I- and P-pictures in layered form according to the numbers of pixels and lines on the optical disk according to Example 6;
FIG. 28 shows data arrangement, with only I-pictures having been layered, on the optical disk according to Example 6;
FIG. 29 is a block diagram showing the conventional optical disk recording and playback apparatus;
FIG. 30 is a diagram showing the data arrangement in MPEG system;
FIG. 31 is a diagram showing the code structure in which one GOP is formed of 17 pictures;
FIG. 32 is a diagram showing the code structure in which one GOP is formed of 10 pictures;
FIG. 33 is a diagram showing the code structure in which one GOP is formed of 15 pictures; and
FIG. 34 is a flowchart showing the operation during special playback conducted on the basis of the address stored at the head of scene in digital motion picture image information stored in the conventional recording format, in the TOC area at the inner periphery of the disk.

### DETAILED DESCRIPTION OF THE PREFERRED EMBODIMENTS

### Embodiment 1

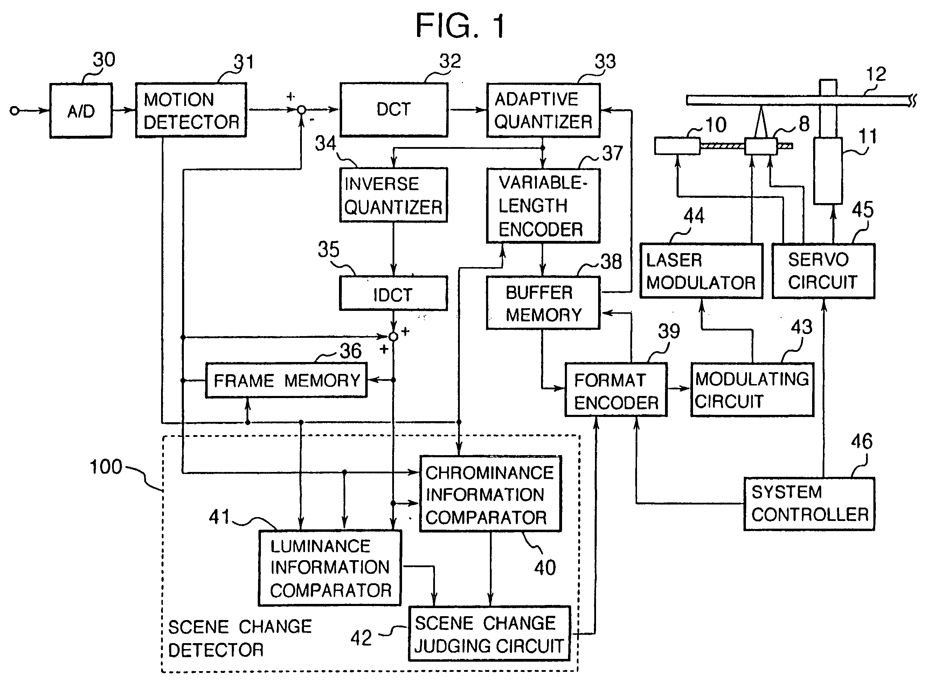

FIG. 1 is a block diagram showing a recording system of an optical disk device of Embodiment 1 of the present invention. In the drawing, an A/D converter 30 converts an analog video signal into a digital signal. A motion detector 31 detects the motion vector of the digital video signal. A discrete cosine transform circuit 32 divides the image information into horizontal and vertical spatial frequency components. Reference numeral 33 denotes an adaptive quantizer, and 34 denotes an inverse quantizer. An inverse discrete cosine transform circuit 35 restores the image information from the frequency components.
A frame memory 36 stores the image information as reference images, on the basis of the motion vector, 37 denotes a variable-length encoder, and 38 denotes a buffer memory. A format encoder 38 appends the address information and attribute data.

A color information comparator 40 compares the color information of a picture with color information of preceding and/or succeeding picture, and in particular compares the color components of each picture with color components of preceding and/or succeeding picture, used as a reference picture, after motion compensation by motion vector detection. A luminance information comparator 41 compares luminance information of each picture with luminance information of the preceding and/or succeeding picture. A scene change judging circuit 42 judges whether or not a scene change is present on the basis of the outputs of the comparators 40 and 41. The members 40, 41 and 42 form a scene change detector 100.

A modulating circuit 43 serves to restrain the effect of the interference between codes, a laser modulating circuit 44 is for modulating the laser on the basis of the information from the modulating circuit 43. A servo circuit 45 performs focus tracking. feed control, and disk motor control. Reference numeral 46 denotes a system controller.

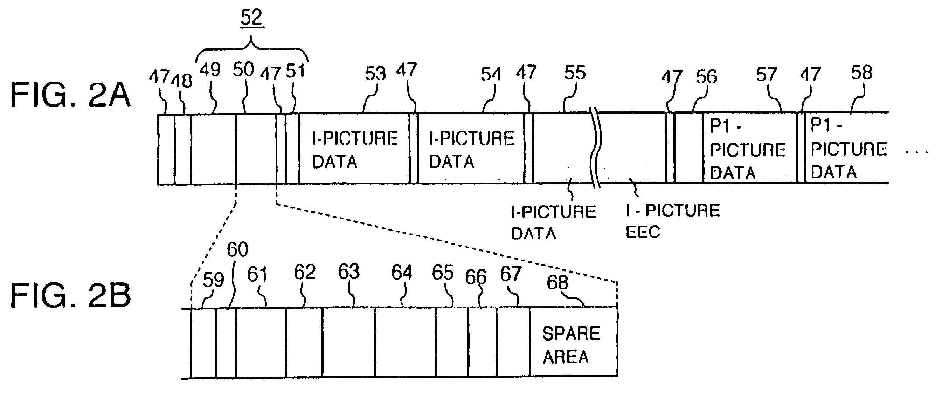

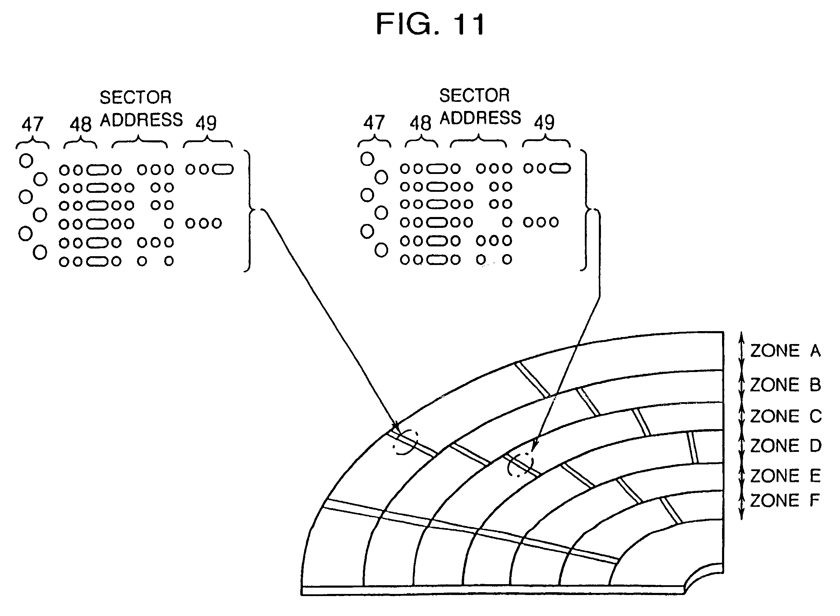

FIG. 2A and FIG. 2B show the recording format of digital motion picture image data in Embodiment 1. In FIG. 2A, reference numeral 47 denotes wobble pits in a sample servo format or a mirror surface part for track offset correction in a continuous groove system, and corresponds to the wobble pits preformatted in the optical disk shown in FIG. 11 or a mirror surface part provided in the continuous groove shown in FIG. 10, 48 denotes a zone address for indicating the address in the disk of a constant zone angular speed (CAV) system. 49 denotes a header indicating the head of the video GOP and a video GOP address indicating the address of the GOP. 50 denotes a video attribute data for recording the attribute data of the video signal. 51 denotes an I-picture header indicating the head of an I-picture, and 52 denotes a video header formed of the areas 49 to 51. Reference numeral 53 denotes an I-picture, 54 denotes a second I-picture data separated by servo pits or a mirror surface, and 55 denotes a third I-picture data separated in the same manner as the second I-picture data 54. Reference numeral 56 denotes a P-picture header, and 57 and 58 denote P1-picture data separated in the same manner as the second I-picture data 54.

FIG. 2B shows the details of the format recorded in the video attribute data 50. Reference numeral 59 denotes a scalability mode (type of the hierarchy) of the digital image data arrangement, 60 denotes the number of frames in the GOP, 61 denotes the structure within the GOP defining the arrangement of I-, B- and P-pictures within the GOP, 62 denotes the structure of arrangement and position of the data within the I-picture, 63 denotes attribute data indicating whether the image within the GOP involves panning, zooming or scene change. 64 denotes a time code of a video area formed of a plurality of GOPs, 65 denotes an address of destination of jump during special playback, 66 denotes an audio mode, and 67 denotes a still-picture mode, 68 denotes a spare area.

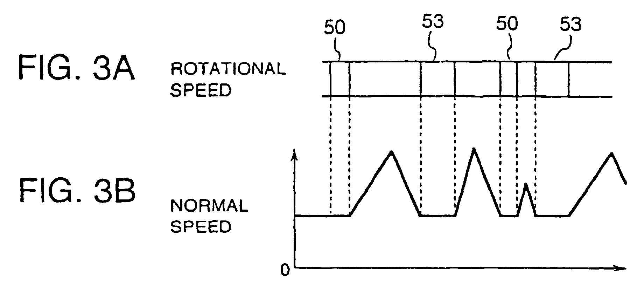

FIG. 3A and FIG. 3B show how the disk rotation speed is varied for fast playback of the image data recorded in the format of FIG. 2A and FIG. 2B.

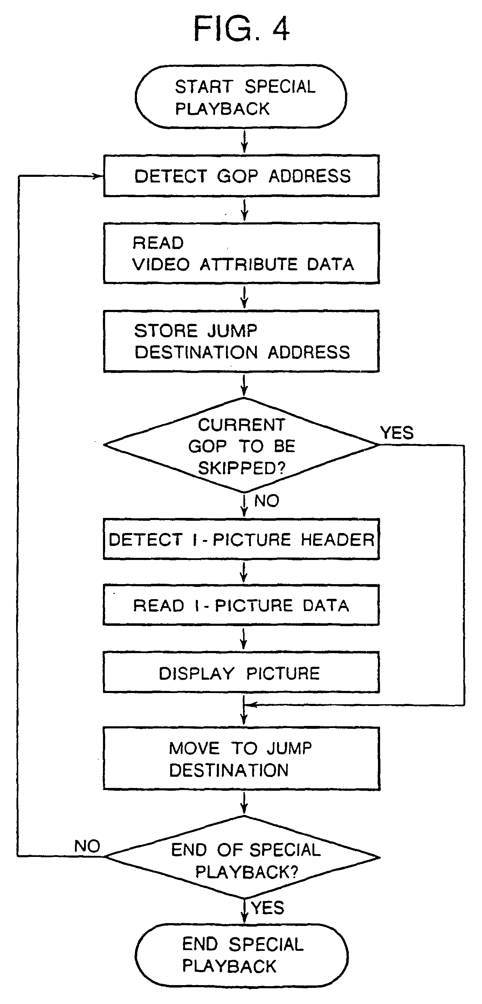

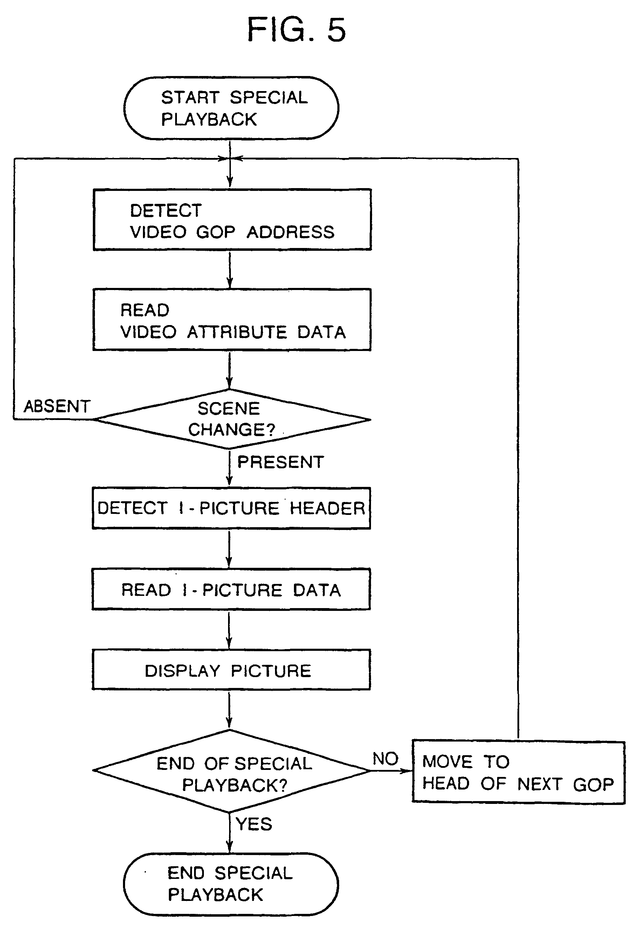

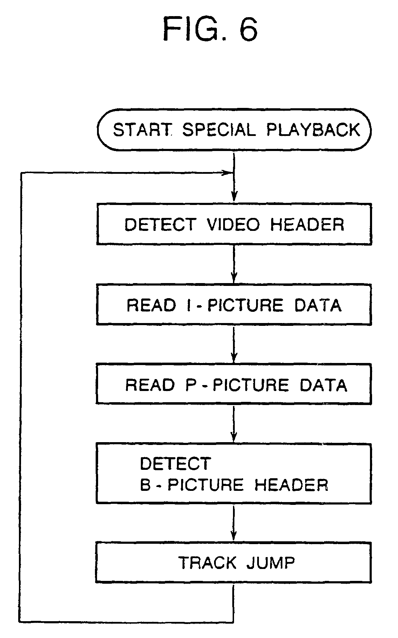

FIG. 4 is a flowchart showing the operation for the special playback using the jump destination address for the special playback written in the video attribute data area at the head of the video GOP. FIG. 5 is a flowchart showing the operation for the special playback using the data indicating whether a scene change is present or not, written in the video attribute data area at the head of the video GOP. FIG. 6 is a flowchart showing the operation for the special playback using in which only the I- and P-pictures within the GOP are reproduced.

The operation of Embodiment 1 will next be described with reference to the drawings. The video signal represented by those of the MPEG system, is recorded on a disk after having been digital-video encoded. The analog video signal is first converted into digital data at the A/D converter 30, and a motion vector is then detected at the motion vector detector 31. Three-dimensional compression is effected by comparison with a reference image, discrete cosine transformation is effected in the frequency directions (two-dimensional directions) at the DCT circuit 32, quantization is effected at the adaptive quantizer 33, and variable-length encoding is effected.

The compressed digital motion picture information thus obtained is passed through the buffer memory 38 and the format encoder 39 where address, header, attribute data and the like are added, to be thereby given a format suitable for recording on the optical disk. Judgment on scene change is made by the use of the frame memory 36 connected to the output of the DCT circuit 35 for comparing successive frames, or by the use of the motion vector detector 31 for detecting a rapid change in the image.

In particular, an accurate judgment on the scenes can be made at the scene change judging circuit 42 by comparing chrominance information and luminance information separately along the time axis, at the chrominance information comparator 40 and the luminance information comparator 41. and by comparing the amount of variation and variation speed for each picture.

The output of the scene change judging circuit 42 is stored as the presence or absence of a scene change in the video attribute data 50 in FIG. 2A and FIG. 2B. In the format of FIG. 2A, the video attribute data 50 can be used to record, in addition to the presence or absence of a scene change, the address of the jump destination, the structure of the GOP and the number of pictures within the GOP, the scalability mode, the time code and the like, and special playback or the like can be effected using such attribute data.

FIG. 2A and FIG. 2B show the digital motion picture image data recording format, in which I- and P-pictures are adjacent to each other, and video attribute data 50 is disposed at the head of the GOP. At the time of recording, on the basis of the result of the judgment at the scene change judging circuit 42, the presence or absence of a scene change is stored in the video attribute data 50 in FIG. 2A, and the address of destination of jump during special playback is also stored in the video attribute data 50. Since the digital motion picture image recording circuit is provided with a buffer memory 38, the recording data is still held in the buffer memory 38 while the image is processed, so that the jump destination address can be stored.

For instance, when the GOP is of such an image which does not require jump playback (e.g., it consists of a succession of rapidly moving images. or still-picture-like image which is similar to the preceding GOP), information that the GOP need not be played back and should be skipped over is stored in the attribute data. and if the next GOP needs to be played back, a flag to that effect is set. The special playback is achieved by reproducing only the video attribute data 50 in sequence. and playing back the GOPs for which this flag at the head thereof is set.

Instead of the flag, designation of the jump destination address may be used.

In the case of the reverse playback, the buffer memory 38 need not have a large capacity, and yet storage of the jump destination address and setting of the flag indicating whether the preceding GOP needs playback can be realized with ease.

The operation of reading from the optical disk is as shown in FIG. 5. First, the address of the head of the GOP is detected, and then the video attribute data 50 is read, an I-picture of the GOP is reproduced if a scene change is present, and jump is made to a next GOP if no scene change is present. In this way, the special playback is continued.

As shown in the flowchart of FIG. 4, special playback is also possible by reading the jump destination address stored in the video attribute data 50. In this case, by reading the video attribute data 50, the jump destination address is stored, and, on the basis thereof, an I-picture is reproduced, and a track jump is also conducted when the current GOP should be skipped over. In this way, the special playback is achieved.

By the use of the above methods, it is possible to achieve special playback in which only such GOPs of a plurality of GOPs formed on the disk that need to be reproduced are reproduced in turn. In these cases, still pictures are successively reproduced or still pictures at the heads of respective scenes are continuously reproduced.

In a special playback in which I- and P-pictures are continuously reproduced, the operation is as shown in FIG. 6. In this case, after the video header is detected, I- and P-pictures are read, and when a B-picture header is detected. a track jump is conducted to the video head of the next GOP and similar operation is repeated in the successive GOPs. However, with this method, the special playback speed multiplier (the ratio of the time for normal replay to the time for fast replay) is limited because the amount of data for I- and P-pictures in each GOP is large.

### Example 2

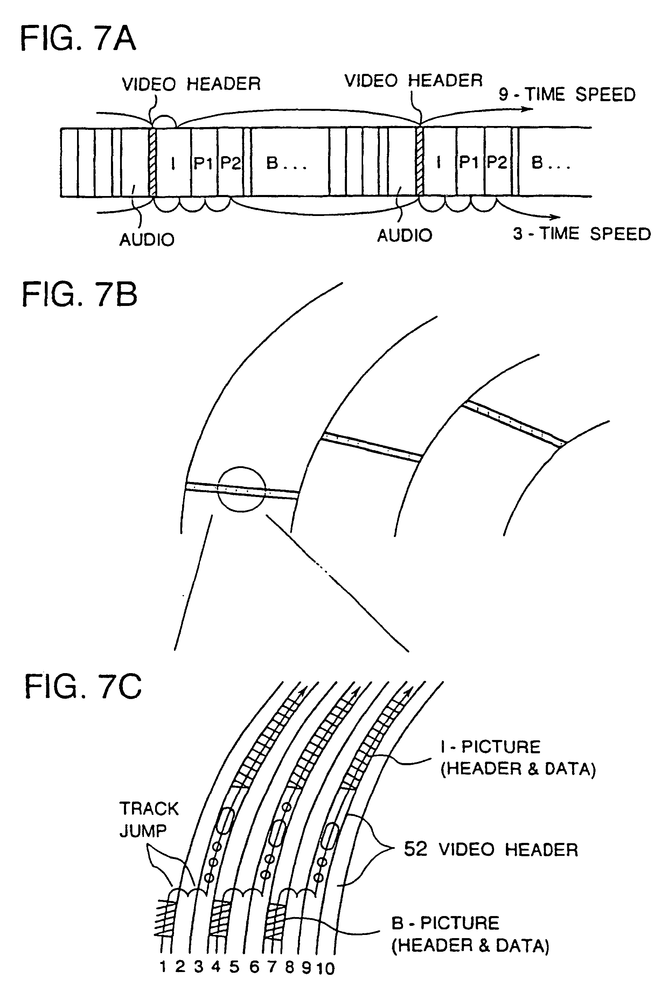

Embodiment 2 is next described with reference to the drawings. FIG. 7A shows the method of reading data in which the image data recorded in the format of FIG. 2A is fast-played back by track jump, and FIG. 7B shows the disposition of the video header 52 on the disk, and FIG. 7C shows the track jump at the video header.

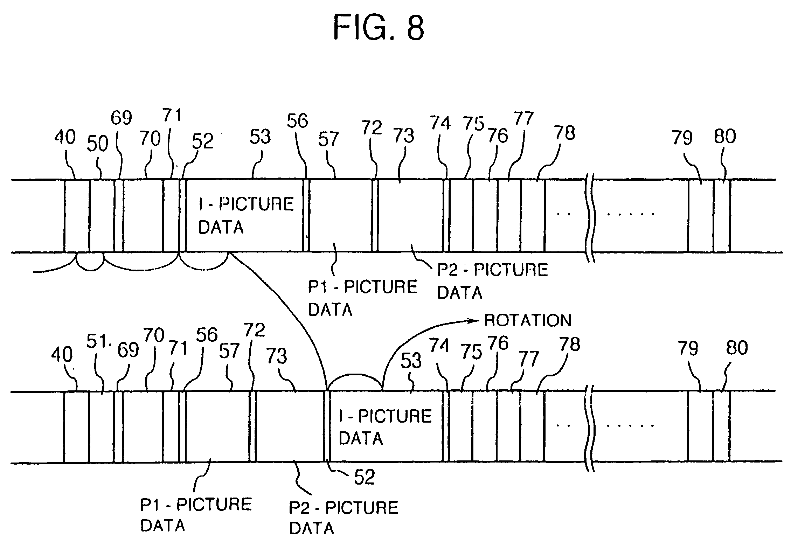

In FIG. 8, the order of I- and P-pictures is reversed every GOP, so that I-picture reproduction at the time of track jump is achieved with a shorter rotation waiting time. In the drawing, reference numeral 69 denotes an audio header indicating the head of the audio signal. 70 denotes audio data, 71 denotes a video data recognition parity for recognition of the head of the video data, 72 denotes P2-picture header indicating the head of the second P-picture. 73 denotes P2-picture data, 74 denotes a B-picture header indicating the head of B-pictures, 75 to 79 denote B1- to Bn-picture data, and 80 denotes an end mark indicating the end of the GOP.

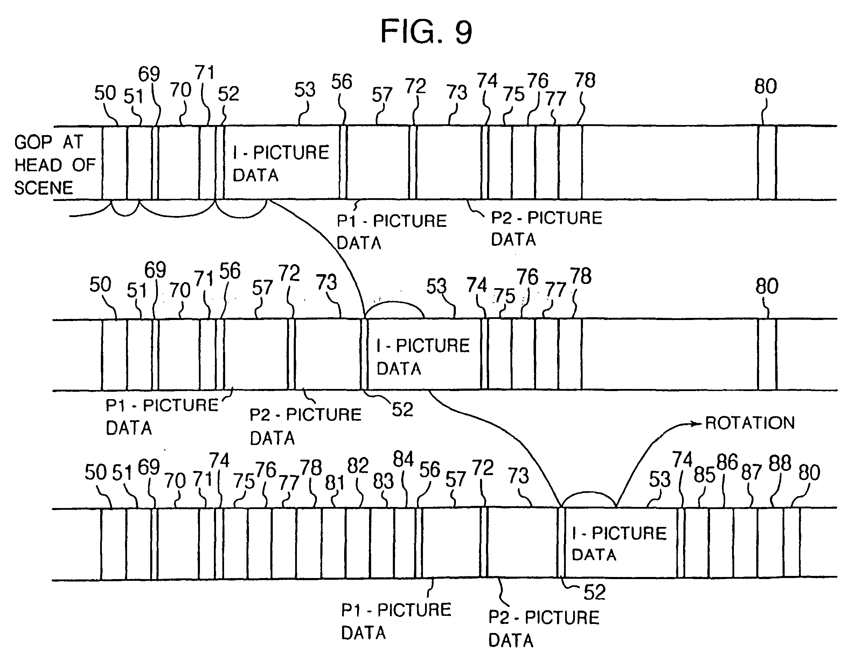

In FIG. 9, the positions at which I- and P-picture image information is disposed are shifted from one GOP to another. so that I-picture reproduction at the time of track jump is achieved with an even shorter rotation waiting time. In the drawing, reference numerals 81 to 88 denote B-picture (B5- to B12-picture) data

The operation of Example 2 will next be described with reference to the drawings. In FIG. 7A, the data in the GOP is arranged in the order of I-, P- and B-pictures. In this case, special playback is achieved by repeating the steps of reading the video header 52 including the video GOP address 49 and the video attribute data 50 shown in FIG. 2A. then reproducing an I-picture, and skipping P- and B-pictures. and then reproducing an I-picture in the next GOP, and so on.

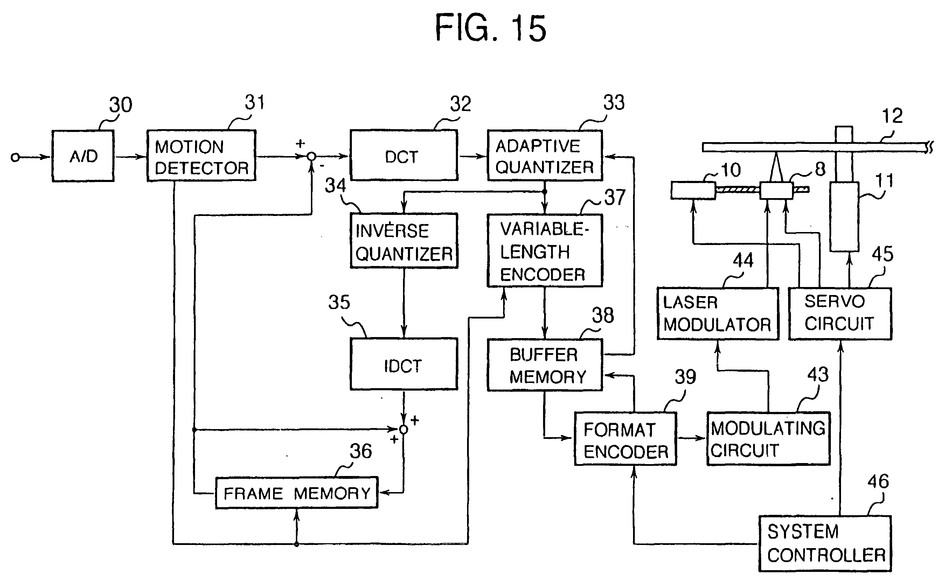

In such a case, because the data occupation proportion of an I-picture in each GOP is fairly large, and the amount of data of an I-picture is three to five times the amount of data of a B-picture, so that even if reproduction of P- and B-pictures is omitted, the special playback efficiency (as a ratio of the amount of data which is not read to the amount of data that is read during special playback) is not so high. and in addition the rotation waiting time is present. As a result, the special playback speed multiplier is not high. If however one GOP consists of 10 pictures as shown in FIG. 32 or 15 pictures as shown in FIG. 33, special playback at about double or triple speed is possible.

In order to reduce the rotation waiting time, the data arrangement shown in FIG. 8 is conceived. In the illustrated data arrangement, the order of I- and P-pictures is opposite between adjacent GOPs. In the case of FIG. 8, when reproduction of an I-picture in a first GOP is completed, and track jump is effected, then reproduction of an I-picture in the next GOP is commenced immediately or after only a certain servo stabilizing period.

Furthermore, by changing the order of the I-, P- and B-pictures every GOP as shown in FIG. 9, it is possible to achieve an arrangement in which I-pictures can be read continuously for more GOPs. In the illustrated example, I-pictures can be read continuously for three GOPs, so that substantially smooth special playback by the continuous reproduction of I-pictures for the three GOPs is possible.

By reproducing I-picture data, playback can be achieved without rotation waiting between GOPs. Accordingly, unlike Embodiment 1, smooth continuous motion picture special playback is possible.

### Example 3

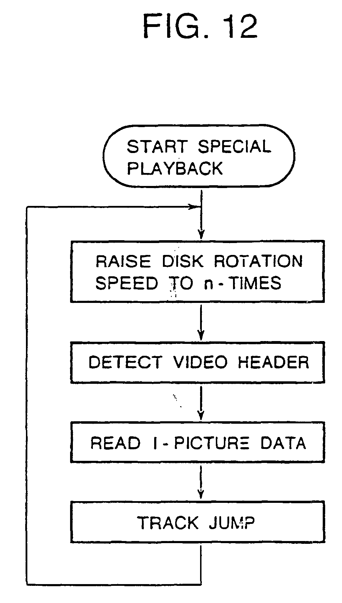

FIG. 10 shows a format arrangement on a disk of a continuous groove type in Example 3. FIG. 11 shows a format arrangement on a disk of a sample servo type in Example 3. FIG. 12 is a flowchart showing the operation of reading data in which the disk rotation speed is increased during special playback.

The operation of Example 3 will next be described. Generally, for the purpose of increasing the recording density of an optical disk, constant linear velocity (CLV) recording is advantageous over constant angular velocity (CAV) recording. However, in CLV recording, the head of image data and the disposition on the I-picture on the disk is not fixed, and because in particular the angular position of the I-pictures is at random, the operation of Embodiment 1 or Example 2 is difficult. The disk is therefore divided into zones, e.g., zones A to G as illustrated in FIG. 10 or FIG. 11, and the head regions of the GOPs within each zone are made to be aligned in the radial direction of the disk.

The linear recording density can be made substantially equal between different zones, by varying the disk motor rotational speed between different zones, or by varying the frequency of the data clock during recording and playback.

But in such a case, the recording capacity per one revolution of the disk is different between different zones. It is possible to realize the zone division by which the recording capacity per GOP is a multiple of the recording capacity per revolution. For instance, it may be so set that one GOP is formed of five tracks in the innermost zone, while one GOP is formed of two tracks in the outermost zone.

Instead of setting the recording capacity per GOP to be a multiple of the recording capacity per revolution, it may alternatively be so set that the recording capacity per GOP is a multiple of the recording capacity per half a revolution. Then, finer zone division is possible. If it is so set that the recording capacity per GOP is a multiple of the recording capacity per a quarter of one revolution, even finer zone division is possible.

In this case, the GOP address in the video information is written immediately after the servo pits (wobble pits) in the sample servo type or the mirror surface part in the continuous guide groove type, and by setting the length of the mirror surface part or the wobble pits in which the GOP address is recorded to be of a different length from other parts, the sum signal (reflection signal) from the optical head can be used as an index during search.

In the system for recording and playing back digital motion picture image using an optical disk, such as those described above, the special playback can be achieved by using track jump as described in connection with Embodiment 1 and Example 2. It is also possible to increase the disk rotation speed during continuous playback in order to further increase the overall playback speed. For instance, the disk rotation speed is doubled, and the data transfer rate is doubled, and yet the data reproduction is possible. By reproducing I- and P-pictures only, double speed playback can be achieved.

If the disk rotational speed is increased to four or eight times, the data rate is too high, and the data detection may be impossible. In such a case, while I- and P-pictures are reproduced the disk rotational speed may be lowered to such a value at which playback is possible, and while B-pictures are reproduced the disk rotation speed may be increased, as shown in FIG. 3B.

The operation of the optical disk drive for such a playback is as shown in FIG. 12. The operation comprising the following steps is repeated. First, the rotational speed is increased to n-times, and then the video header is detected to read an I-picture, and jump is made to the next GOP. By disposing an I-picture in the video attribute data 50, the disk motor acceleration region and the deceleration region can be set.

### Example 4

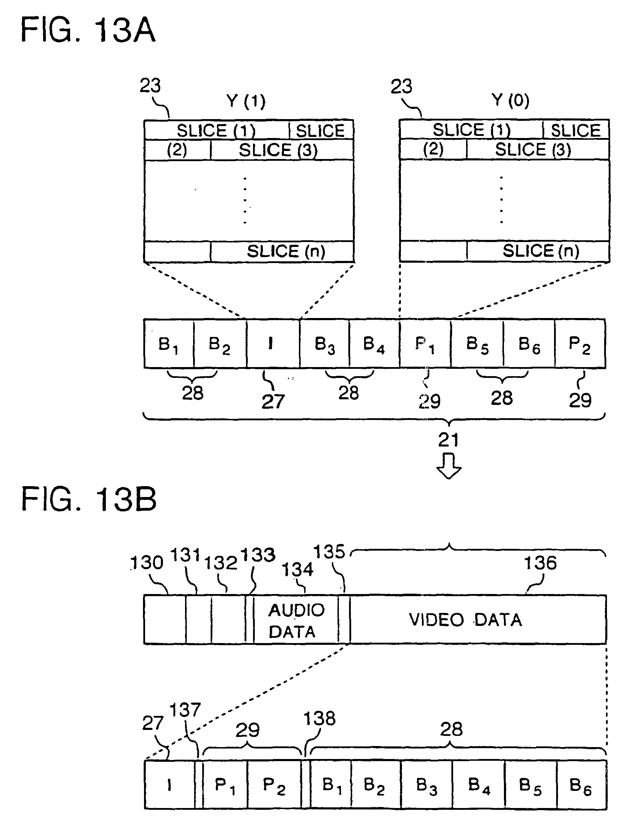

Example 4 will next be described. FIG. 13A and FIG. 13B show the data structure of the digital motion picture image according to Example 4. FIG. 13A shows the structure of a GOP, FIG. 13B shows the data arrangement of the entire GOP including audio data. In the drawings, reference numerals 21 to 29 denotes data identical to those described in connection with the prior art example with reference to FIG. 30 to FIG. 33. Reference numeral 130 denotes a header indicating the head of the data, 131 denotes an address of each GOP forming a unit of editing, 132 denotes attribute data attendant to the digital motion picture image data, 133 denotes an audio header indicating the head of audio data 134. Reference numeral 135 denotes a video header indicating the head of video data 136. Reference numeral 137 denotes a P-picture header indicating the head of a P-picture 29. Reference numeral 138 denotes a B-picture header indicating the head of a B-picture 28. In the drawings, P-. B- and I-pictures are respectively represented as "P-picture," "B-picture," and "I-picture."

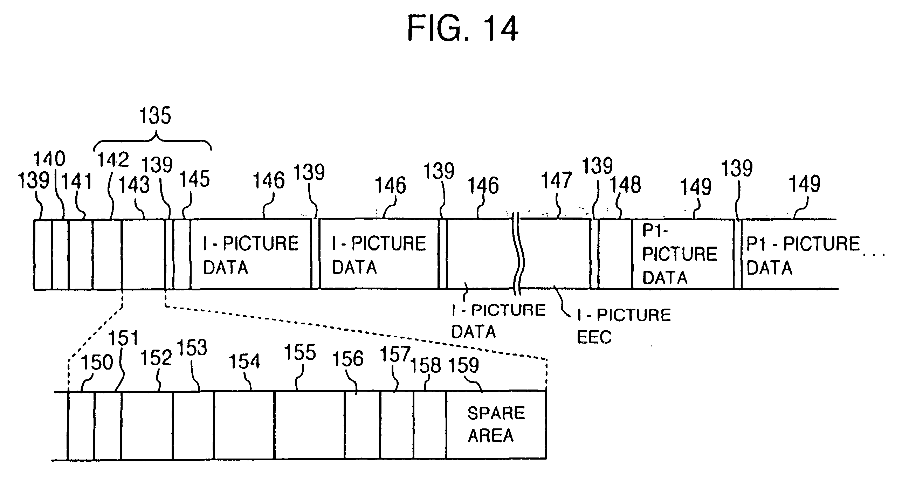

FIG. 14 shows the details of configuration of the digital motion picture image data arrangement in Example 4. Reference numeral 139 denotes wobble pits in the sample format or a mirror surface part for offset correction in the continuous guide groove type, 140 denotes a zone address in the optical disk of a zone constant angular velocity (CAV) rotation system. 141 denotes a sector address for each sector which is a fraction of a GOP, 142 denotes a video GOP address for each video GOP, 143 denotes a video attribute data attendant to a digital motion picture image, and 145 denotes an I-picture header indicating the head of I-picture data 146. Reference numeral 147 denotes I-picture ECC (error correction code) recording the I-picture data error correction code, and 148 denotes a P-picture header indicating the head of P-picture data 149. Reference numeral 150 denotes a scalability mode, 151 denotes the number of frames within the GOP, 152 denotes the GOP structure showing the arrangement of I-, B- and P-pictures, and the like within the GOP, 153 denotes the arrangement and position of data within an I-picture, 154 denotes detailed attribute data such as presence or absence of panning, zooming and scene change, 155 denotes a time code, 156 denotes an address of destination of jump during special playback, 157 denotes an audio mode, 158 denotes a still picture mode, and 159 denotes a spare area.

FIG. 15 is a block diagram showing an optical disk recording device for use with an optical disk according to Example 4. The illustrated recording and playback device is identical to that shown in FIG. 1, except that the scene change detector 100 in FIG. 1 is not provided. The reference numerals 8, 10 - 12, 30 - 39, and 43 to 46 denote members or components identical to those in FIG. 1.

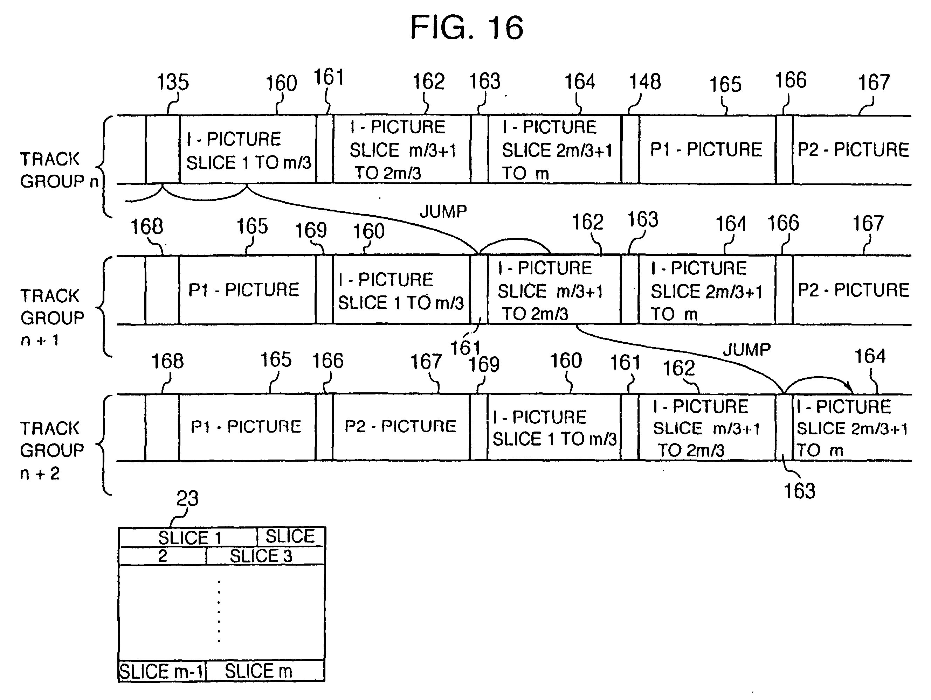

FIG. 16 shows the structure of details of the part where I-picture data is recorded on the optical disk. The video header 135 indicates the head of the video data in n-th track group, 160 denotes fraction data formed of a plurality of slices for the top 1/3 part (from the top edge to a.first horizontal dividing line 1/3 as measured from the top edge of the screen) of the screen of the I-picture 27. Reference numeral 162 denotes a fraction data formed of a plurality of slices for the middle 1/3 part (from the first horizontal division line to a second horizontal dividing line at 2/3 as measured from the top edge of the screen) of the I-picture 27. Reference numeral 164 denotes a fraction data formed of a plurality of slices for the bottom 1/3 part (from the second horizontal dividing line to the bottom edge of the screen) of the I-picture 27. Reference numeral 161 denotes a sub-header indicating the head of fraction data 162. Reference numeral 163 denotes a sub-header indicating the head of fraction data 164. Reference numeral 148 denotes a P-picture header. 165 denotes a first P-picture data within the GOP, and 166 denotes a header indicating the head of a second P-picture data 167. Reference numeral 168 denotes a header indicating the entirety of each of the digital motion picture image of (n+1)-th and (n+2)-th track groups, and also indicating the head of P-picture data, 169 denotes a header indicating the part 160 where the data for the slices 23 in the upper 1/3 part of the screen of the I-picture 27 is recorded.

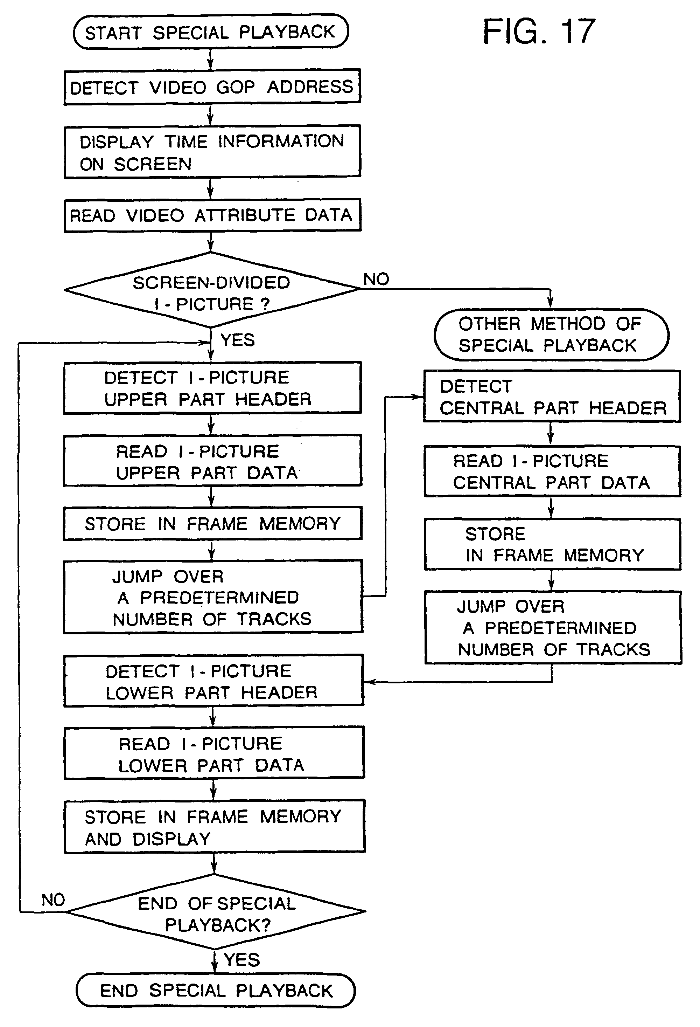

FIG. 17 is a flowchart showing the operation of special playback of a motion picture in an optical disk device, with a system having a digital motion picture image data file structure in which the screen is divided in the vertical direction of the screen into fractions, each comprising a multiple of slices.

The operation will next be described. A digital motion picture image data usually is formed of a mixture of data of I-, B- and P-pictures 27, 28 and 29, as shown in FIG. 31 to FIG. 33 in connection with the prior art example. An I-picture 27 can be reproduced independently because two-dimensional compression is used. However. P-pictures cannot be reproduced until the I-picture is reproduced, and B-pictures cannot be reproduced until the I- and P-pictures have been reproduced. A data arrangement on the disk that is advantageous from the view point of the signal processing is therefore, that I and P-pictures are successively disposed first in the GOP as shown in FIG. 13B, and B-pictures are thereafter disposed.

In this case, it is also desirable that the audio data is also arranged for each GOP. This enables after-recording (recording audio signal after video signal) and editing. Moreover, with the data structure shown in FIG. 13A and FIG. 13B by providing video GOP address 142, headers 145 and 148 indicating the heads of I- and P-pictures as shown in FIG. 14, to enable editing for each GOP it is possible to extract a I-picture data of a single picture alone, or P-picture data of a single picture alone.

By providing a region 143 in which attribute data of the digital motion picture image data is written, and by providing scalability mode 150 indicating whether the hierarchial structure is suitable for use with the particular numbers of pixels and lines on the screen, the number of frames, 151, within the GOP, the GOP structure 152 indicating the arrangement and the like of I-, B- and P-picture data within the GOP, the disk can be used in conjunction with a variety of signal processing systems. By describing the I-picture data structure within the GOP structure 152, the arrangement suitable for the special playback which will be described below can also be adopted.

As has been described, with the format in which I- and P-pictures are successively disposed in the GOP, it is possible to implement special playback by modifying the I-picture data structure. In this case, by dividing the I-picture data into one-third fractions. each comprising an integer number of slices, as shown in FIG. 16, and the positions of the file blocks corresponding to the respective positions on the screen are exchanged between GOPs. Such a data arrangement is possible by controlling the buffer memory 38 by means of the format encoder 39 in the optical disk recording and playback device shown in FIG. 15.

With the file structure shown in FIG. 16, if the heads of the GOPs are aligned in the disk radial direction, it is possible to reproduce image of one picture from 3 GOPS, by performing track jump, as illustrated, and adjoining the data for the fractions of I-picture. Partial continuous reproduction of I-pictures can be achieved with short rotation waiting times, so that the speed of the fast playback using I-picture data can be made high even though the amount of I-picture data is larger than P- and B-pictures.

Moreover, with the disk format of the zone CAV system. GOP head data can be aligned in the disk radial direction, if the zone allocation is such that the amount of data per GOP is a multiple of one revolution or a multiple of half a revolution.

The operation of the optical disk device during the special playback described above is shown in the flow chart of FIG. 17. First, when the special playback is started. the video GOP address is detected, and the time code and the like are displayed on the screen by means of a character generator or the like. Next, the video attribute data in the GOP is read, and judgment as to whether the I-picture is of the divided type. If it is of the divided type, the header at the top part of the screen of an I-picture is detected, and the data is read, and track jump is then performed, and the header for the central part of the screen is detected and the data is read, and jump is again made. and the header for the bottom part of the screen is detected and the data is read. The fractional data of the I-picture are adjoined by the image memory (buffer memory 38 in FIG. 15). The above operations are repeated until the special playback is completed. In this way, fast playback and reverse playback can be achieved.

By application of the Example, the special playback speed multiplier can be improved even in the case of an optical disk of a CLV system. This is because the data of the I-pictures is divided and fractions thereof are reproduced, while in the prior art all the I-picture data were reproduced. Note in this connection that the data capacity of an I-picture is much larger than the B- and P-pictures, and during special playback, an I-picture and then P-pictures are reproduced, or only I-pictures are reproduced successively.

### Example 5

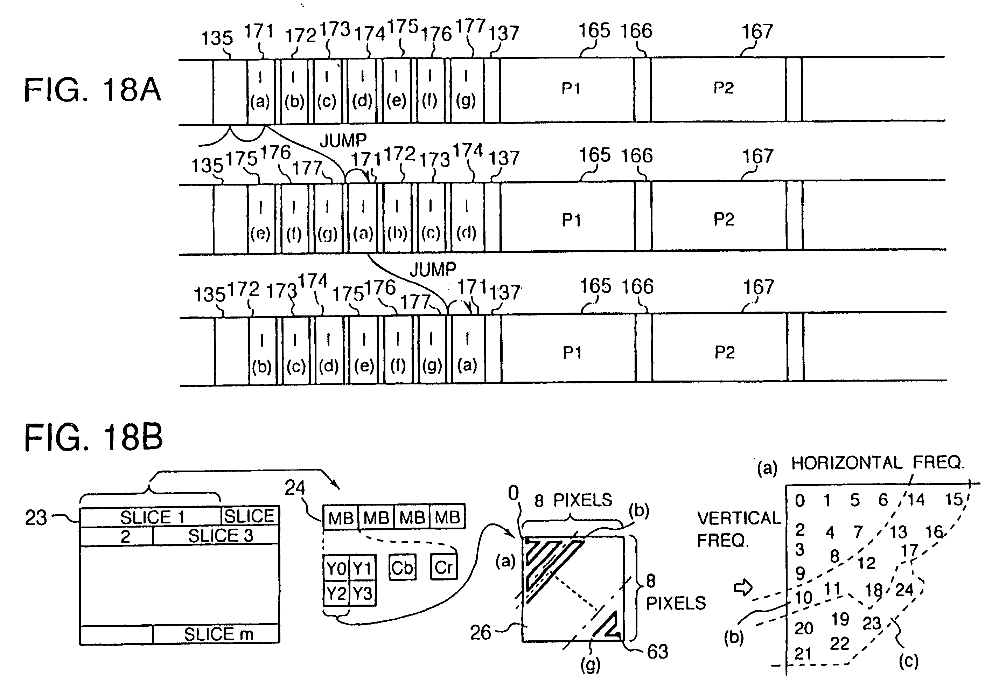

FIG. 18A shows the arrangement, structure of the digital motion picture image data in Example 5. Reference numerals 171 to 177 denote new file blocks which are formed when the block layer 26 is of a digital motion picture image in DCT encoding is divided with reference to the spatial frequency as shown in FIG. 18B. In FIG. 18A and FIG. 18B. the file structure within an I-picture for each GOP is divided into groups of respective spatial frequency regions in DCT codes. and the disposition is altered from one GOP to another. The frequency of the respective groups is increased in the order of (a) to (g).

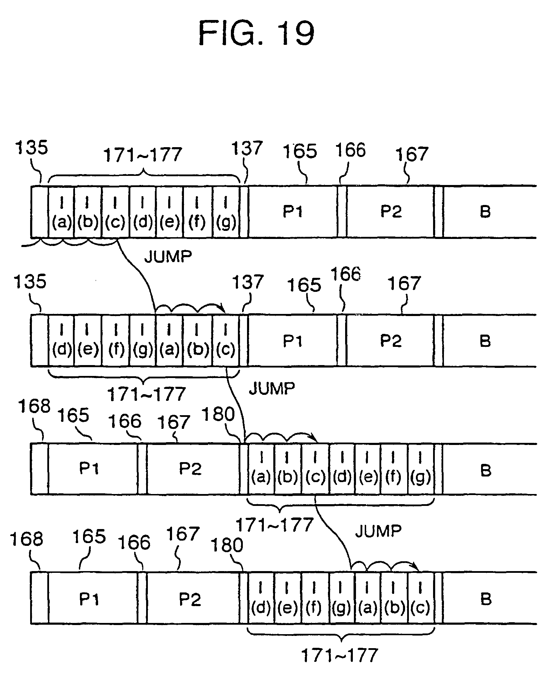

FIG. 19 shows a data structure which is a modification of FIG. 18A. The arrangement of I- and P-picture data is altered from one GOP to another. In the drawing, reference numeral 180 denotes an I-picture header indicating the head of the I-picture data.

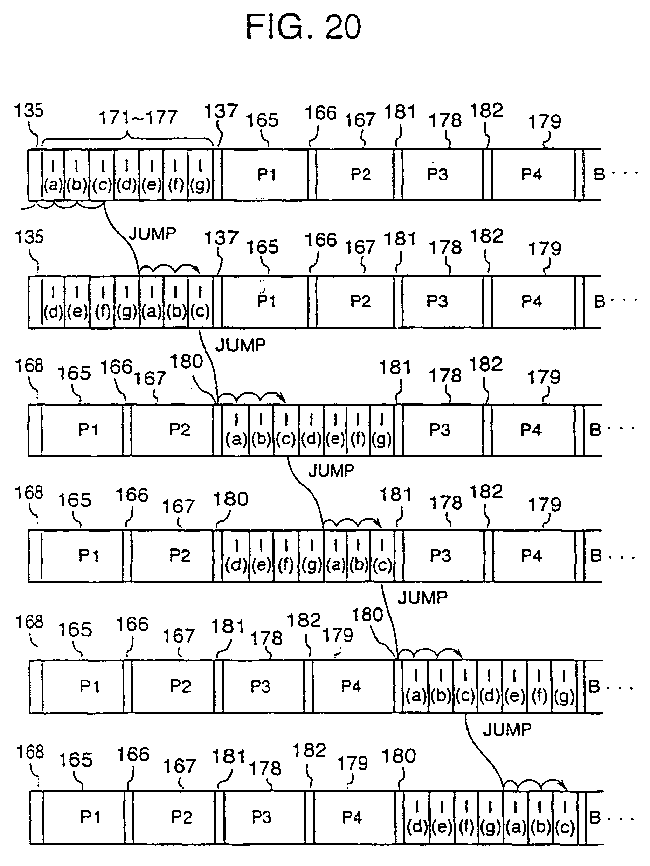

FIG. 20 shows an example in which each GOP has four P-pictures. Reference numeral 181 denotes a third P-picture header indicating the head of third P-picture data 178, and 182 denotes a fourth P-picture header indicating the head of fourth P-picture data 179.

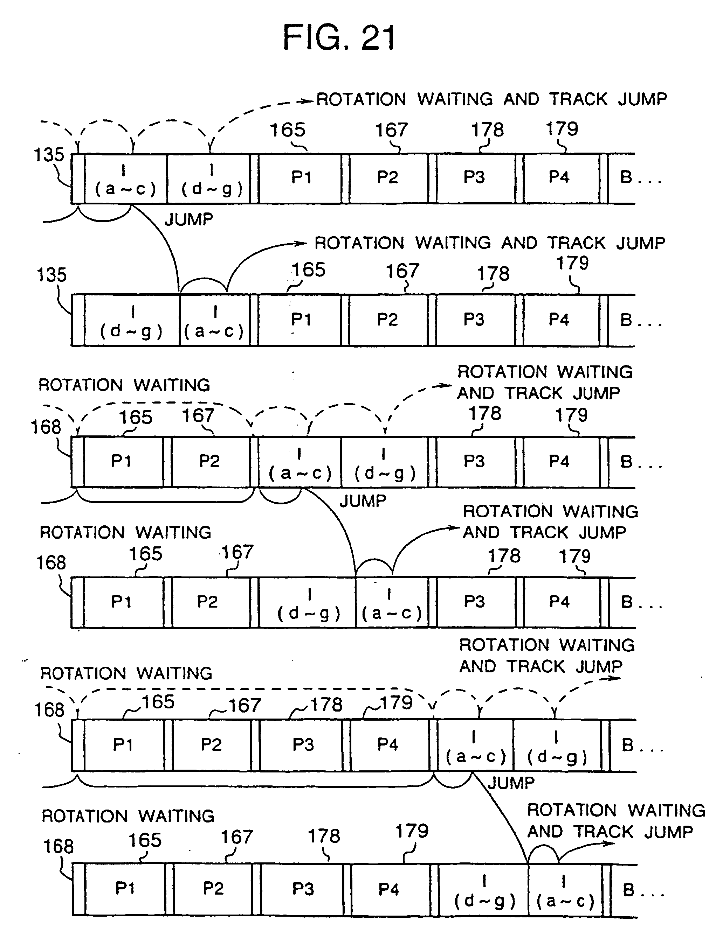

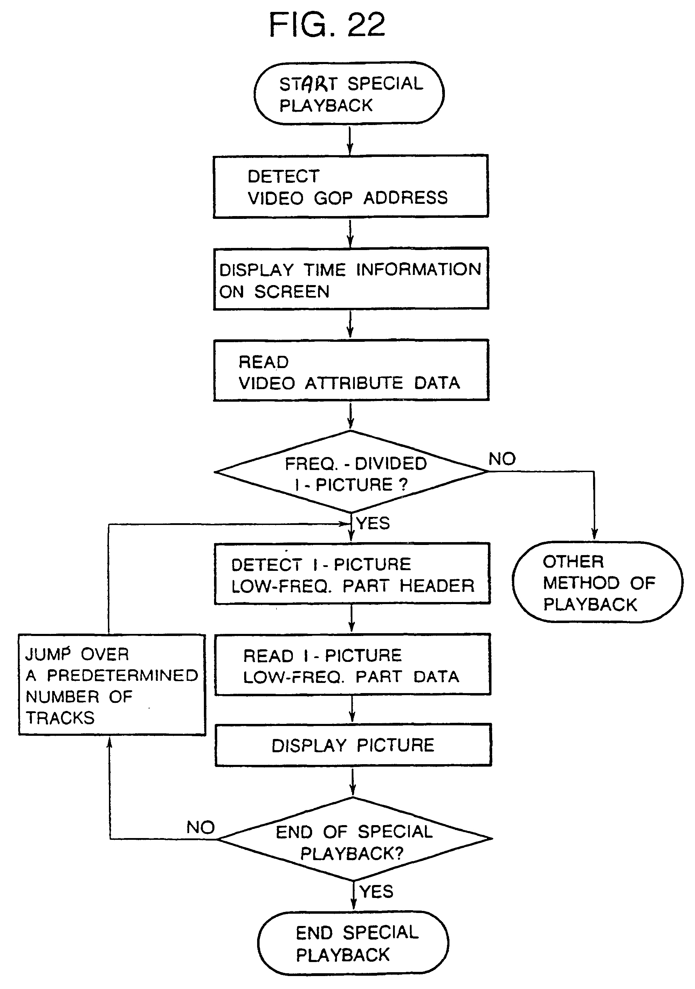

FIG. 21 shows the operation of special playback taking account of the rotation waiting with the digital motion picture image data arrangement shown in FIG. 20. FIG. 22 is a flowchart showing the operation of the optical disk drive for the case where I-picture data is divided according to the frequency.

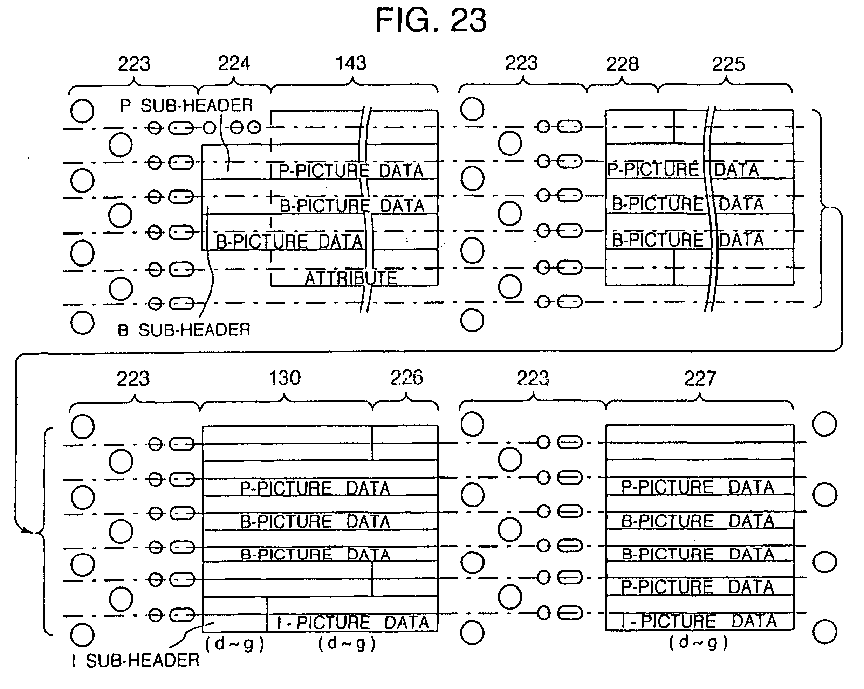

FIG. 23 shows the data arrangement on the optical disk for the case where the optical disk of a zone CAV system is formatted according the sample servo system. In the drawing, reference numeral 223 denotes a header and servo pits, 224 denotes a sector address, 225 denotes audio data, 226 denotes a sub-header for the data block (d) to (g) in the I-picture, 227 denotes I-picture data for the (d) to (g) of the I-picture, and 228 denotes a header for the audio data.

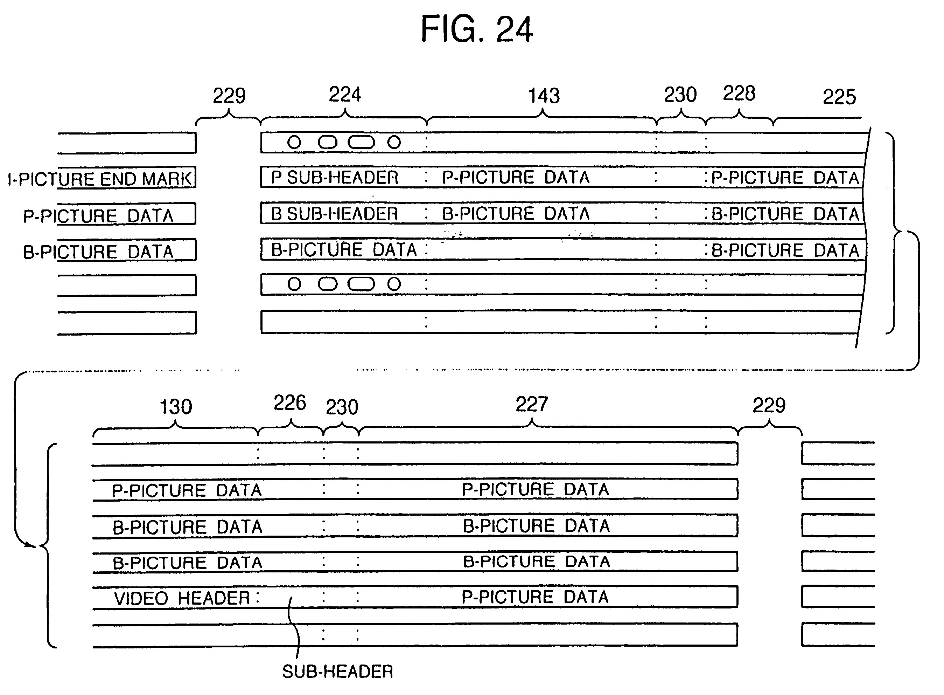

FIG. 24 shows the data arrangement on the optical disk for the continuous guide groove system. In the drawing, reference numeral 229 shows a mirror surface part for detecting the offset of the tracking sensor during tracking in the push-pull method, and 230 denotes a re-sync byte for the case where a modulation system having an intermittent data structure of the 2-7 modulation or 1-7 modulation is used. The re-sync byte contains a reference clock for PLL for the purpose of data detection.

The operation of Example 5 will next be described. In the standard digital motion picture image compression system represented by MPEG, JPEG. and the like, the data arrangement is obtained through division according to the vertical and horizontal spatial frequencies at the time of DCT encoding of each macroblock 24, and scanning in zig-zag fashion as shown in FIG. 18B. For instance. if the 64 DCT encoding data of I-picture data are divided into blocks, seven blocks (a) to (g), each consisting of 9 or 10 DCT encoding data are formed. At the time of data recording, these I-picture data are not arranged taking each slice 23 as a unit, but are arranged taking each of the blocks (a) to (g) as a unit, as illustrated, and a header signal, a parity signal, and the like are added to the head of the block forming each of fractions generated by the division according to the frequency regions, it is possible to obtain image during special playback, by reproducing the data closer to the DC component of the DCT encoding data. In this way, it is not necessary to reproduce the entirety of each I-picture data having a relatively large data amount.

Assume, for instance, that the optical disk has the structure of the zone CAV system, and the GOP head positions are aligned in the disk radial direction. By re-arranging the data blocks (a) to (g) of an I-picture for each GOP as shown in FIG. 18A, it is possible to continuously reproduce only data block (a) in the I-picture data. If, for instance, a signal of a rate four times that of the current standard CD (compact disk) were recorded at a double linear density on an optical disk of the current CD size (the diameter being 15 cm), the disk rotation speed would be changed from 600 rpm to 1200 rpm. and the worst rotation waiting time would be the time corresponding to three pictures.

For this reason, where one GOP is formed of 15 pictures, and if an I-picture can be read within a time for one picture (about 33 msec), it is possible to perform a 15-time speed playback in which I-pictures are successively reproduced. If a rotation waiting occurs, the time corresponding to three pictures (about 100 msec.) is wasted per revolution, and the maximum playback speed will be five time the normal speed.

If a playback system in which a next GOP is skipped and an I-picture in the next-but-one GOP is reproduced is employed, to prevent the degradation in the special playback speed multiplier, one out of 30 pictures is displayed, and at the time of 15-time speed, the same picture is displayed twice. The motion in the displayed motion picture is awkward. Moreover, a necessary scene may be missed as the skipping is increased.

To prevent the awkwardness and skipping, the amount of reproduced data of the I-picture is reduced to the extent in which image recognition is possible. That is. only the low-frequency components in the DCT encoding are reproduced, for example. Moreover, position of the low-frequency component is altered from one GOP to another. In addition, track jump is repeated. By these measures, the rotation waiting time is shortened.

Furthermore, if digital motion picture image data is recorded as shown in FIG. 19, instead of successively reproducing only the data block (a) of an I-picture data as shown in FIG. 18A, data blocks (b) and (c) of the I-picture data are also reproduced, with the result that finer image can be reproduced even in special playback. If the positions of the I- and P-pictures are exchanged, in addition to the exchange of the positions of the data blocks (a) to (c) within the I-picture data as shown in FIG. 19. the rotation waiting time in special playback is further reduced. In this case, every four GOPs form a group for which continuous data is obtained, and the fast playback is achieved by a succession of such groups each consisting of four GOPs.

Furthermore, if the number of P-pictures per GOP is four as shown in FIG. 20, every two P-pictures are made to form a group, and the positions of each group and an I-picture are exchanged to achieve fast playback in which data blocks (a) to (c) of an I-picture data are reproduced. In this case. every six GOPs form a group for which continuous data is obtained, and the fast playback is achieved by a succession of such groups each consisting of six GOPs.

Where a certain rotation waiting is permitted, and if special playback is at a several-time speed, track jump as shown in FIG. 21 is performed. If track jump is performed as indicated by dotted line, reproduction of I-pictures is effected every alternative GOPs (using data blocks (a) to (g) of every second GOP), while if track jump is performed as indicated by a solid line, reproduction of I-pictures is effected every GOP (using data blocks (a) to (c) of every GOP).

As the data arrangement within I-pictures is altered as shown in FIG. 21, the operation as indicated by the solid line is possible, and finer movement can be realized than in the case of the dotted line.

During the special playback as described above, the optical disk drive performs the operation as shown in the flowchart of FIG. 22. First, the address of the head of the GOP of the digital motion picture image data is detected, and the time information such as time code, disk address information, or the like is displayed on the screen. Then. video attribute data is read, and judgement is made as to whether the I-picture data is frequency-divided. If it is frequency-divided, the head of the low-frequency component of the I-picture is detected, and the I-picture low-frequency component is read, and a corresponding picture is displayed, and track jump over a predetermined number tracks is performed. The above operations are repeated until the completion of the special playback. In this way, the data of the low-frequency components in the DCT encoding of I-pictures is sequentially reproduced, and special playback is achieved in this way.

In an optical disk having a disk format of a sample servo system, if sectors, each formed of a part from a header and servo pits 223 to the next header and servo pits 223, as shown in FIG. 23, are aligned in a radial direction within each zone. and I-picture data, P-picture data, audio data and the like are completed over a multiple of sectors of said sample servo format, the disk structure shown in FIG. 18A to FIG. 21 is realized on the disk.

In an optical disk having a disk format of a continuous guide groove system, it is possible to adopt a file structure on the disk as shown in FIG. 24 to provide similar effects, i.e.. to realize the disk structure shown in FIG. 18A to FIG. 21. In this case, a part from one mirror surface part 229 to another mirror surface part 229 form a large file unit. This large file unit can be sub-divided by re-sync byte 230 into sub-division file units, and I-picture data, P-picture data, audio data and the like are made to be of such a length which is a multiple of the sub-division file units. In this way, it is possible to realize the data structure on the disk as shown in FIG. 18A to FIG. 21.

Description has been made for the case where the optical disk is of a zone CAV format. In the case of CLV format as well, it is possible to improve the special playback speed multiplier by frequency-dividing the I-pictures.

### Example 6

Example 6 will next be described.

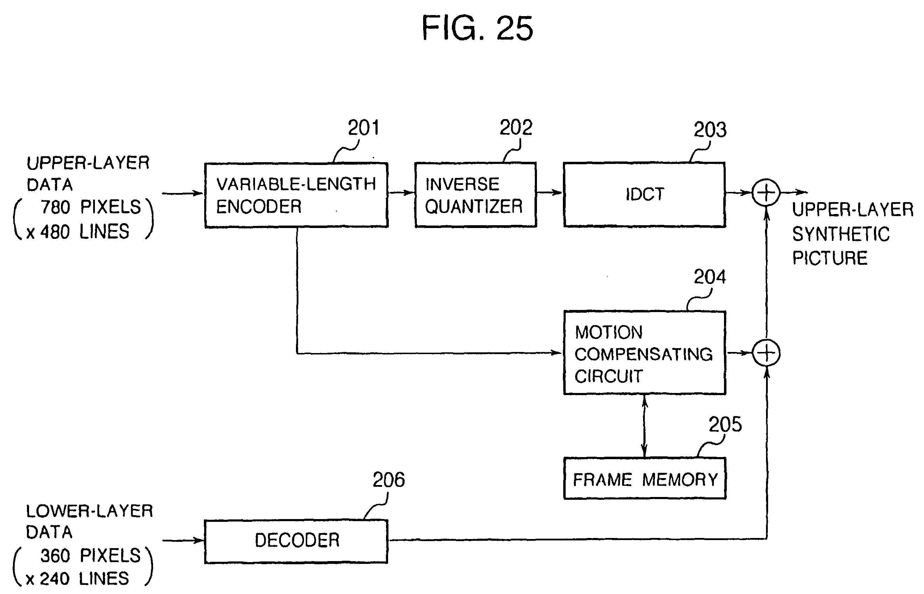

FIG. 25 is a block diagram showing a decode circuit for restoring the image signal of 780 pixels x 480 lines from a layered information, the layered information being obtained by layering digital motion picture compressed image information into compressed information corresponding to 780 pixels x 480 lines, and compressed information corresponding to 360 pixels x 240 lines. In the drawing, reference numeral 201 denotes a variable-length encoder, 202 denotes an inverse quantizer, 203 denotes an inverse discrete cosine transform circuit, 204 denotes a motion compensating circuit, 205 denotes a frame memory, and 206 denotes a decoder for restoring the digital motion picture compressed image data of the lower layer.

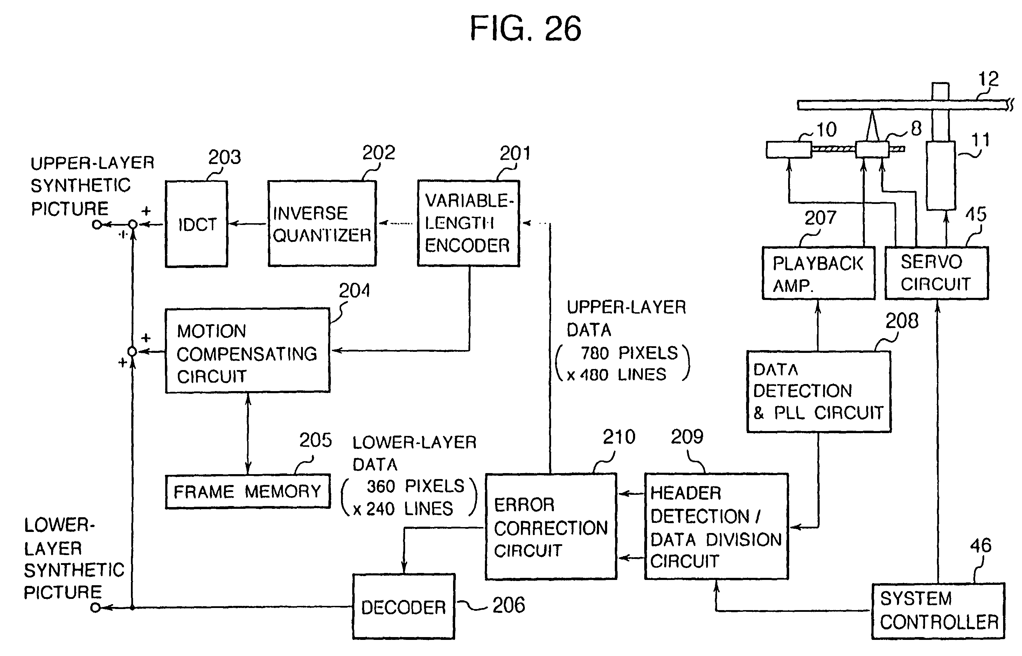

FIG. 26 is a block diagram showing an optical disk device for decoding the digital motion picture compressed image information recorded on the optical disk, being layered, using the decode circuit shown in FIG. 25. In the drawing, reference numeral 207 denotes a playback amplifier for reproducing digital motion picture image information recorded on the optical disk, and 208 denotes a data-detection & PLL circuit for detecting the data from the signal from the playback amplifier 207. Reference numeral 209 denotes a header detection & data discriminating circuit for detecting the header signal in the data detected by the data detection & PLL circuit 208 and discriminating the data. Reference numeral 210 denotes an error correction circuit.

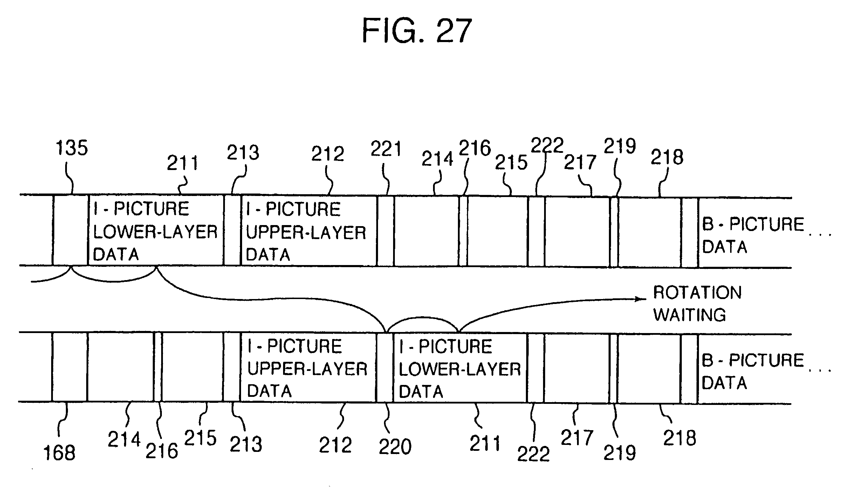

FIG. 27 is a diagram showing the disposition of layered I- and P-picture data on the disk. Reference numeral 211 denotes a lower-layer data of an I-picture corresponding to digital motion picture image information of 360 pixels x 240 lines. 212 denotes an upper-layer data of the I-picture which, in combination with the lower-layer data 211, form data of 780 pixels x 480 lines, and 213 denotes a header of the upper layer data 212. Reference numeral 214 denotes a lower-layer data of a P-picture, 215 denotes an upper-layer data of the P-picture. 217 denotes a lower-layer data of a second P-picture, 218 denotes an upper-layer data of the second P-picture, 219 denotes denotes a header of the upper-layer data of the second P-picture. 220 denotes a header of the upper-layer data of the I-picture, 221 denotes a header of the upper-layer data of the first P-picture, and 222 denotes a header of the lower-layer data of the second P-picture.

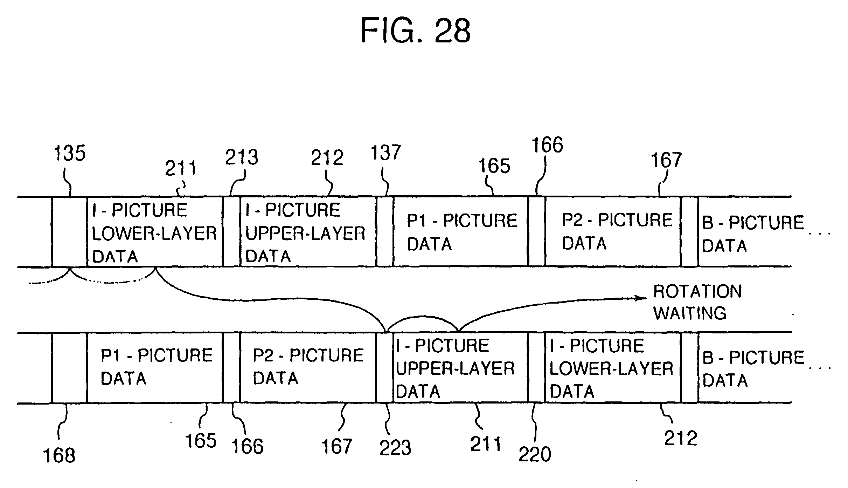

FIG. 28 shows the arrangement, on the disk, of data of which only I-picture data is layered.

The operation of Example 6 will next be described

In the MPEG system is now established as an international standard, there is a method in which the data structure is layered, and divided into a lower-layer image data of 360 pixels x 240 lines, and upper-layer image data which, in combination with the lower-layer image data, form data of 780 pixels x 480 lines. The upper-layer data and the lower-layer data are combined at the decode circuit shown in FIG. 25 to form a synthetic picture of 780 pixels x 480 lines which is a digital motion picture image information of the upper layer.

Where the I- and P-pictures are layered, the data may be arranged on the disk as shown in FIG. 27. The upper-layer and lower-layer data of the I- and P-pictures are disposed, being separated by headers and the like, and the positions of the I- and P-pictures are altered from one GOP to another. In this way, at the time of special playback. track jump is performed, and only the lower-layer data of the I-picture is continuously read.

Moreover, it is also possible to layer the I-pictures only, to thereby simplify the configuration. In this case as well, the positions of the I-picture data and P-picture data may be altered from one GOP to another, to enable continuous reading of the I-picture lower-layer data. Generally, the amount of I-picture data occupies a larger area in the GOP, so that if it is attempted to read all the data, the speed multiplier of the special playback cannot be made high. By reading only the lower-layer data of I- and P-pictures, the special playback speed multiplier can be made high, and the number of frames forming the special playback picture can be increased so as to make the motion smooth.

FIG. 26 is a block diagram showing the optical disk recording and playing back device which can restore layered data. The playback signal from the optical disk that has been amplified by the playback amplifier 207 is detected as data by the data detector 208, and divided into the upper-layer data and lower-layer data at the header detector/data discriminator 209. The discriminated data is error-corrected at the error correction circuit 210, and input into a layered-data decode circuit similar to that shown in FIG. 25, to achieve reproduction of image. With the lower-layer data alone, only the image of 360 pixels x 240 lines can be obtained.

## Claims

1. An optical disk having digital image information recorded thereon, the digital image information comprising an image information block including I-picture data for intra-frame coded pictures, P-picture data for predictive coded pictures, and B-picture data for bidirectionally predictive coded pictures, said disk comprising:
a plurality of recording sectors, each sector being associated with an address recorded on said optical disk; and
a plurality of tracks, each track including a plurality of recording sectors;
wherein the image information block includes a video attribute data region (49, 50) preceding the picture data, said video attribute data region containing picture position information, which indicates a position of coded pictures in the corresponding image information block on accessing during playback to read at least I-picture data of the digital image information in the corresponding image information block, and jump destination information, which indicates an address of the next image information block to be played back during said playback to read at least I-picture data;
and wherein the video attribute data region (49, 50) has an address (49) on the head thereof, and the address of the next image information block is an address of the video attribute data region in the next image information block.

2. An apparatus for playing back video information from an optical disk, said optical disk having digital image information recorded thereon, the digital image information comprising an image information block including I-picture data for intra-frame coded pictures, P-picture data for predictive coded pictures, and B-picture data for bidirectionally predictive coded pictures, the image information block including a video attribute data region preceding the picture data, said video attribute data region containing picture position information, which indicates a position of coded pictures in the corresponding image information block on accessing during playback to read at least I-picture data of the digital image information in the corresponding image information block, and jump destination information which indicates an address of the next image information block to be played back during said playback to read at least I-picture data, wherein the video attribute data region has an address on the head thereof, and the address of the next image information block is an address of the video attribute data region in the next image information block, said apparatus comprising:
a disk motor for rotating said disk; and
an optical head for emitting light onto said disk and receiving light reflected from said disk to reproduce information recorded thereon; wherein
said apparatus, during playback, reads the video attribute data corresponding to an image information block, reads at least I-picture data of the digital image information in the corresponding image information block based on said picture position information, and jumps to the next image information block to be reproduced by said optical head in accordance with said jump destination information.

3. A method of playing back video information from an optical disk, said optical disk having digital image information recorded thereon, the digital image information comprising an image information block including I-picture data for intra-frame coded pictures, P-picture data for predictive coded pictures, and B-picture data for bidirectionally predictive coded pictures, the image information block including a video attribute data region preceding the picture data, said video attribute data region containing picture position information, which indicates a position of coded pictures in the corresponding image information block on accessing during playback to read at least I-picture data of the digital image information in the corresponding image information block, and jump destination information which indicates an address of the next image information block to be played back during said playback to read at least I-picture data, wherein the video attribute data region has an address on the head thereof, and the address of the next image information block is an address of the video attribute data region in the next image information block, said method comprising:
reading, during playback the video attribute data of a corresponding image information block;
reading at least I-picture data of the digital image information in the corresponding image information block based on said picture position information; and
jumping to the next image information block from which digital image information is to be reproduced in accordance with said jump destination information.

4. A method of recording, on an optical disk, digital information comprising an image information block including I-picture data for intra-frame coded pictures, P-picture data for predictive coded pictures, and B-picture data for bidirectionally predictive coded pictures, said method comprising:
disposing a video attribute data region of a corresponding image information block, preceding the picture data in the image information block;
said disk comprising:
a plurality of recording sectors, each sector being associated with an address recorded on said optical disk; and
a plurality of tracks, each track including a plurality of recording sectors;
wherein said video attribute data region contains picture position information, which indicates a position of coded pictures in the corresponding image information block on accessing during playback to read at least I-picture data of the digital image information in the corresponding image information block, and jump destination information, which indicates an address of the next image information block to be played back during said playback to read at least I-picture data, and wherein the video attribute data region has an address on the head thereof, and the address of the next image information block is an address of the video attribute data region in the next image information block.

5. An apparatus for recording, on an optical disk, digital image information comprising an image information block including I-picture data for intra-frame coded pictures, P-picture data for predictive coded pictures, and B-picture data for bidirectionally predictive coded pictures, said apparatus comprising:
a unit for disposing a video attribute data region of a corresponding image information block, preceding the picture data in the image information block;
said disk comprising:
a plurality of recording sectors, each sector being associated with an address recorded on said optical disk; and
a plurality of tracks, each track including a plurality of recording sectors;
wherein said video attribute data region contains picture position information, which indicates a position of coded pictures in the corresponding image information block on accessing during playback to read at least I-picture data of the digital image information in the corresponding image information block, and jump destination information, which indicates an address of the next image information block to be played back during said playback to read at least I-picture data, and wherein the video attribute data region has an address on the head thereof, and the address of the next image information block is an address of the video attribute data region in the next image information block.

## Patentansprüche

1. Optische Platte mit darauf aufgezeichneten digitalen Bildinformationen, welche digitalen Bildinformationen einen Bildinformationsblock enthaltend I-Bilddaten für Intra-Vollbild-codierte Bilder, P-Bilddaten für vorhersagend codierte Bilder und B-Bilddaten für bidirektional vorhersagend codierte Bilder aufweisen, welche Platte aufweist:
eine Vielzahl von Aufzeichnungssektoren, wobei jeder Sektor mit einer auf der optischen Platte aufgezeichneten Adresse assoziiert ist; und
eine Vielzahl von Spuren, wobei jede Spur mehrere Aufzeichnungssektoren enthält;
bei der der Bildinformationsblock einen Videoattributdatenbereich (49, 50) enthält, der den Bilddaten vorangeht, welcher Videoattributdatenbereich Bildpositionsinformationen, die eine Position von codierten Bildern in dem entsprechenden Bildinformationsblock beim Zugriff während der Wiedergabe zum Lesen von zumindest I-Bilddaten der digitalen Bildinformationen in dem entsprechenden Bildinformationsblock anzeigen, und Sprungbestimmungsinformationen, die eine Adresse des nächsten wiederzugebenden Bildinformationsblocks während dieser Wiedergabe anzeigen, um zumindest I-Bilddaten zu lesen, enthält;
und bei der der Videoattributdatenbereich (49, 50) eine Adresse (49) des Kopfes hiervon hat, und die Adresse des nächsten Bildinformationsblocks eine Adresse des Videoattributdatenbereichs in dem nächsten Bildinformationsblock ist.

2. Vorrichtung zum Wiedergeben von Videoinformationen von einer optischen Platte, welche optische Platte darauf aufgezeichnete digitale Bildinformationen hat, wobei die digitalen Bildinformationen einen Bildinformationsblock enthaltend I-Bilddaten für Intra-Vollbild-codierte Bilder, P-Bilddaten für vorhersagende codierte Bilder und B-Bilddaten für bidirektional vorhersagende codierte Bilder aufweisen, der Bildinformationsblock einen den Bilddaten vorhergehenden Videoattributdatenbereich, welcher Videoattributdatenbereich Bildpositionsinformationen enthält, die eine Position von codierten Bildern in dem entsprechenden Bildinformationsblock beim Zugriff während der Wiedergabe zum Lesen von zumindest I-Bilddaten der digitalen Bildinformationen in dem entsprechenden Bildinformationsblock anzeigen, und Sprungbestimmungsinformationen, die eine Adresse des nächsten wiederzugebenden Bildinformationsblocks während dieser Wiedergabe anzeigen, um zumindest I-Bilddaten zu lesen, enthält, bei der der Videoattributdatenbereich eine Adresse des Kopfes hiervon hat und die Adresse des nächsten Bildinformationsblocks eine Adresse des Videoattributdatenbereichs in dem nächsten Bildinformationsblock ist, welche Vorrichtung aufweist:
einen Plattenmotor zum Drehen der Platte; und
einen optischen Kopf zum Emittieren von Licht auf die Platte und zum Empfangen von von der Platte reflektiertem Licht, um darauf aufgezeichnete Informationen wiederzugeben; wobei
die Vorrichtung während der Wiedergabe die Videoattributdaten entsprechend einem Bildinformationsblock liest, zumindest I-Bilddaten der digitalen Bildinformationen in dem entsprechenden Bildinformationsblock auf der Grundlage der Bildpositionsinformationen liest und zu dem nächsten durch den optischen Kopf wiederzugebenden Bildinformationsblock entsprechend den Sprungbestimmungsinformationen springt.

3. Verfahren zum Wiedergeben von Videoinformationen von einer optischen Platte, welche optische Platte darauf aufgezeichnete digitale Bildinformationen hat, wobei die digitalen Bildinformationen einen Bildinformationsblock aufweisen, der I-Bilddaten für Intra-Vollbild-codierte Bilder, P-Bilddaten für vorhersagende codierte Bilder und B-Bilddaten für bidirektional vorhersagende codierte Bilder enthält, der Bildinformationsblock einen den Bilddaten vorangehenden Videoattributdatenbereich enthält, welcher Videoattributdatenbereich Bildpositionsinformationen, die eine Position von codierten Bildern in dem entsprechenden Bildinformationsblock beim Zugriff während der Wiedergabe anzeigen, um zumindest I-Bilddaten der digitalen Bildinformationen in dem entsprechenden Bildinformationsblock zu lesen, und Sprungbestimmungsinformationen, die eine Adresse des nächsten wiederzugebenden Bildinformationsblocks während dieser Wiedergabe anzeigen, um zumindest I-Bilddaten zu lesen, enthält, wobei der Videoattributdatenbereich eine Adresse des Kopfes hiervon hat und die Adresse des nächsten Bildinformationsblocks eine Adresse des Videoattributdatenbereichs in dem nächsten Bildinformationsblocks ist, welches Verfahren aufweist:
Lesen eines entsprechenden Bildinformationsblocks während der Wiedergabe der Videoattributdaten;
Lesen von zumindest I-Bilddaten der digitalen Bildinformationen in dem entsprechenden Bildinformationsblock auf der Grundlage der Bildpositionsinformationen; und
Springen zu dem nächsten Bildinformationsblock, von dem digitale Bildinformationen wiederzugeben sind, entsprechend den Sprungbestimmungsinformationen.

4. Verfahren zum Aufzeichnen von digitalen Informationen, die einen Bildinformationsblock enthaltend I-Bilddaten für Intra-Vollbild-codierte Bilder, P-Bilddaten für vorhersagende codierte Bilder und B-Bilddaten für bidirektional vorhersagende codierte Bilder aufweisen, auf einer optischen Platte, welches Verfahren aufweist:
Anordnen eines Videoattributdatenbereichs eines entsprechenden Bildinformationsblocks den Bilddaten vorhergehend in dem Bildinformationsblock; welche Platte aufweist:
eine Vielzahl von Aufzeichnungssektoren, wobei jeder Sektor mit einer auf der optische Platte aufgezeichneten Adresse assoziiert ist; und
eine Vielzahl von Spuren, wobei jede Spure mehrere Aufzeichnungssektoren enthält;
wobei der Videoattributdatenbereich Bildpositionsinformationen, die eine Position von codierten Bildern in dem entsprechenden Bildinformationsblock beim Zugriff während der Wiedergabe anzeigen, um zumindest I-Bilddaten der digitalen Bildinformationen in dem entsprechenden Bildinformationsblock zu lesen, und Sprungbestimmungsinformationen, die eine Adresse des nächsten wiederzugebenden Bildinformationsblocks während dieser Wiedergabe anzeigen, um zumindest I-Bilddaten zu lesen, enthält, und wobei der Videoattributdatenbereich eines Adresse des Kopfes hiervon hat und die Adresse des nächsten Bildinformationsblocks eine Adresse des Videoattributdatenbereichs in dem nächsten Bildinformationsblock ist.

5. Vorrichtung zum Aufzeichnen digitaler Bildinformationen, die einen Bildinformationsblock enthaltend I-Bilddaten für Intra-Vollbild-codierte Bilder, P-Bilddaten für vorhersagende codierte Bilder und B-Bilddaten für bidirektional vorhersagende codierte Bilder aufweisen, auf einer optischen Platte, welche Vorrichtung aufweist:
eine Einheit zum Anordnen eines Videoattributdatenbereichs eines entsprechenden Bildinformationsblocks den Bilddaten vorhergehend in dem Bildinformationsblock;
welche Platte aufweist:
eine Vielzahl von Aufzeichnungssektoren, wobei jeder Sektor mit einer auf der optischen Platte aufgezeichneten Adresse assoziiert ist; und
eine Vielzahl von Spuren, wobei jede Spur mehrere Aufzeichnungssektoren enthält;
wobei der Videoattributdatenbereich Bildpositionsinformationen, die eine Position von codierten Bildern in dem entsprechenden Bildinformationsblock beim Zugriff während der Wiedergabe anzeigen, um zumindest I-Bilddaten der digitalen Bildinformationen in dem entsprechenden Bildinformationsblock zu lesen, und Sprungbestimmungsinformationen, die eine Adresse des nächsten wiederzugebenden Bildinformationsblocks während dieser Wiedergabe anzeigen, um zumindest I-Bilddaten zu lesen, enthält, und wobei der Videoattributdatenbereich eine Adresse des Kopfes hiervon hat und die Adresse des nächsten Bildinformationsblocks eine Adresse des Videoattributdatenbereichs in dem nächsten Bildinformationsblock ist.

## Revendications

1. Disque optique portant des informations d'images numériques enregistrées sur lui, les informations d'images numériques comprenant un bloc d'informations d'images contenant des données d'images I pour des images à codage intra-image, des données d'images P pour des images à codage prédictif et des données d'images B pour des images à codage prédictif bidirectionnel, ledit disque comprenant :
une pluralité de secteurs d'enregistrement, chaque secteur étant associé à une adresse enregistrée sur ledit disque optique ; et
une pluralité de pistes, chaque piste comprenant une pluralité de secteurs d'enregistrement ;
dans lequel le bloc d'informations d'images comprend une région de données d'attributs vidéo (49, 50) qui précède les données d'images, ladite région de données d'attributs vidéo contenant une information de position d'image, qui indique une position d'images codées dans le bloc d'informations d'images correspondant à laquelle accéder au cours d'une reproduction pour lire au moins des données d'image I des informations d'images numériques dans le bloc d'informations d'images correspondant, et une information de destination de saut, qui indique une adresse du bloc d'informations d'images suivant à reproduire au cours de ladite reproduction pour lire au moins des données d'image I ;
et dans lequel la région de données d'attributs vidéo (49, 50) a une adresse (49) sur l'en-tête de celle-ci, et l'adresse du bloc d'informations d'images suivant est une adresse de la région de données d'attributs vidéo dans le bloc d'informations d'images suivant.

2. Dispositif de reproduction d'informations vidéo à partir d'un disque optique, ledit disque optique portant des informations d'images numériques enregistrées sur lui, les informations d'images numériques comprenant un bloc d'informations d'images contenant des données d'images I pour des images à codage intra-image, des données d'images P pour des images à codage prédictif et des données d'images B pour des images à codage prédictif bidirectionnel, le bloc d'informations d'images comprenant une région de données d'attributs vidéo qui précède les données d'images, ladite région de données d'attributs vidéo contenant une information de position d'image, qui indique une position d'images codées dans le bloc d'informations d'images correspondant à laquelle accéder au cours d'une reproduction pour lire au moins des données d'image I des informations d'images numériques dans le bloc d'informations d'images correspondant, et une information de destination de saut, qui indique une adresse du bloc d'informations d'images suivant à reproduire au cours de ladite reproduction pour lire au moins des données d'image I, dans lequel la région de données d'attributs vidéo a une adresse sur l'en-tête de celle-ci, et l'adresse du bloc d'informations d'images suivant est une adresse de la région de données d'attributs vidéo dans le bloc d'informations d'images suivant, ledit dispositif comprenant :
un moteur de disque pour faire tourner ledit disque ; et
une tête optique pour émettre de la lumière vers ledit disque et recevoir de la lumière réfléchie par ledit disque afin de reproduire des informations enregistrées sur lui ; dans lequel
ledit dispositif, au cours d'une reproduction, lit les données d'attributs vidéo qui correspondent à un bloc d'informations d'images, lit au moins des données d'image I des informations d'images numériques dans le bloc d'informations d'images correspondant en fonction de ladite information de position d'image, et saute au bloc d'informations d'images suivant à reproduire par ladite tête optique en fonction de ladite information de destination de saut.

3. Procédé de reproduction d'Informations vidéo à partir d'un disque optique, ledit disque optique portant des informations d'images numériques enregistrées sur lui, les informations d'images numériques comprenant un bloc d'informations d'images contenant des données d'images I pour des images à codage intra-image, des données d'images P pour des images à codage prédictif et des données d'images B pour des images à codage prédictif bidirectionnel, le bloc d'informations d'images comprenant une région de données d'attributs vidéo qui précède les données d'images, ladite région de données d'attributs vidéo contenant une information de position d'image, qui indique une position d'images codées dans le bloc d'informations d'images correspondant à laquelle accéder au cours d'une reproduction pour lire au moins des données d'image I des informations d'images numériques dans le bloc d'informations d'images correspondant, et une information de destination de saut, qui indique une adresse du bloc d'informations d'images suivant à reproduire au cours de ladite reproduction pour lire au moins des données d'image I, dans lequel la région de données d'attributs vidéo a une adresse sur l'en-tête de celle-ci, et l'adresse du bloc d'informations d'images suivant est une adresse de la région de données d'attributs vidéo dans le bloc d'informations d'images suivant, ledit procédé comprenant les étapes consistant à :
lire, au cours de la reproduction, les données d'attributs vidéo d'un bloc d'informations d'images correspondant ;
lire au moins des données d'image I des informations d'images numériques dans le bloc d'informations d'images correspondant en fonction de ladite information de position d'image ; et
sauter au bloc d'informations d'images suivant à partir duquel des informations d'images numériques doivent être reproduites en fonction de ladite information de destination de saut.

4. Procédé d'enregistrement, sur un disque optique, d'informations numériques comprenant un bloc d'informations d'images contenant des données d'images I pour des images à codage intra-image, des données d'images P pour des images à codage prédictif et des données d'images B pour des images à codage prédictif bidirectionnel, ledit procédé comprenant les étapes consistant à :
placer une région de données d'attributs vidéo d'un bloc d'informations d'images correspondant, pour précéder les données d'images dans le bloc d'informations d'images ;
ledit disque comprenant :
une pluralité de secteurs d'enregistrement, chaque secteur étant associé à une adresse enregistrée sur ledit disque optique ; et
une pluralité de pistes, chaque piste comprenant une pluralité de secteurs d'enregistrement ;
dans lequel ladite région de données d'attributs vidéo contient une information de position d'image, qui indique une position d'images codées dans le bloc d'informations d'images correspondant à laquelle accéder au cours d'une reproduction pour lire au moins des données d'image I des informations d'images numériques dans le bloc d'informations d'images correspondant, et une information de destination de saut, qui indique une adresse du bloc d'informations d'images suivant à reproduire au cours de ladite reproduction pour lire au moins des données d'image I, et dans lequel la région de données d'attributs vidéo a une adresse sur l'en-tête de celle-ci, et l'adresse du bloc d'informations d'images suivant est une adresse de la région de données d'attributs vidéo dans le bloc d'informations d'images suivant.

5. Dispositif d'enregistrement, sur un disque optique, d'informations d'images numériques comprenant un bloc d'informations d'images contenant des données d'images I pour des images à codage intra-image, des données d'images P pour des images à codage prédictif et des données d'images B pour des images à codage prédictif bidirectionnel, ledit dispositif comprenant :
une unité destinée à placer une région de données d'attributs vidéo d'un bloc d'informations d'images correspondant, pour précéder les données d'images dans le bloc d'informations d'images ;
ledit disque comprenant :
une pluralité de secteurs d'enregistrement, chaque secteur étant associé à une adresse enregistrée sur ledit disque optique ; et
une pluralité de pistes, chaque piste comprenant une pluralité de secteurs d'enregistrement ;
dans lequel ladite région de données d'attributs vidéo contient une information de position d'image, qui indique une position d'images codées dans le bloc d'informations d'images correspondant à laquelle accéder au cours d'une reproduction pour lire au moins des données d'image I des informations d'images numériques dans le bloc d'informations d'images correspondant, et une information de destination de saut, qui indique une adresse du bloc d'informations d'images suivant à reproduire au cours de ladite reproduction pour lire au moins des données d'image I, et dans lequel la région de données d'attributs vidéo a une adresse sur l'en-tête de celle-ci, et l'adresse du bloc d'informations d'images suivant est une adresse de la région de données d'attributs vidéo dans le bloc d'informations d'images suivant.
